# EUROPEAN PATENT APPLICATION

(11) **EP 3 738 804 A1**
(43) Date of publication of application: **18.11.2020**
(21) Application number: 20171093.6
(22) Date of filing: 23.04.2020
(51) Int. Cl.: B60H 1/14, B60H 1/00, B60H 1/32

(54) **HEAT PUMP SYSTEM FOR ELECTRIC VEHICLE AND CONTROL METHOD THEREOF**

(30) Priority: 08.05.2019 KR 20190053987
(71) Applicant: LG Electronics Inc., 07336 SEOUL (KR)
(72) Inventor: CHOI, Inho, 08592 Seoul (KR); LEE, Jooseong, 08592 Seoul (KR); KIM, Kyunghwan, 08592 Seoul (KR)
(74) Representative: Ter Meer Steinmeister & Partner

(57) **Abstract**

Disclosed is a heat pump system including a compressor configured to compress a refrigerant, a four-way valve configured to switch a flow direction of the refrigerant discharged from the compressor, an outdoor heat exchanger and an indoor heat exchanger each having one side connected to the four-way valve, an auxiliary heat exchanger connected to the four-way valve by an accumulation pipe and having an internal space filled with a refrigerant from the accumulation pipe, an outdoor pipe extending from the other side of the outdoor heat exchanger, an indoor pipe extending from the other side of the indoor heat exchanger, and a flow pipe branched from an outdoor branch point of the outdoor pipe and extending to an indoor branch point of the indoor pipe.

## Description

### BACKGROUND

### Field of the Invention

The present disclosure relates to a heat pump system for an electric vehicle and a control method thereof.

### Discussion of the Related Art

An electric vehicle is defined as a vehicle that obtains driving energy of an automobile from electrical energy, not from combustion of fossil fuel.

In general, the electric vehicle may include a battery, a drive motor, a reducer, an inverter, a converter, an onboard charger (OBD), and the like. The electric vehicle may generate driving power by supplying electric energy from the battery to the drive motor. Therefore, the electric vehicle may increase a driving distance per charge as power consumption of the battery is reduced.

The electric vehicle may include a heat pump system for the efficient use of electrical energy and for cooling or heating a room (or indoor area). Such a heat pump system for an electric vehicle may include a compressor, a flow path switching valve, an outdoor heat exchanger, an indoor heat exchanger, and an expansion valve.

In a cooling mode, in the heat pump system for an electric vehicle, a high-pressure gaseous refrigerant compressed in the compressor may be condensed through the outdoor heat exchanger and then evaporated in the indoor heat exchanger through the expansion valve. Thus, the room may be cooled.

In a heating mode, in the heat pump system for an electric vehicle, the high-pressure gaseous refrigerant compressed by the compressor may be heat-exchanged with ambient air by a blowing force of an indoor fan, while passing through the indoor heat exchanger. Here, the heat-exchanged refrigerant may be condensed and the ambient air absorb heat to have an increased temperature.

The ambient air increased in temperature is blown by the indoor fan so as to be discharged to the room. Thus, the room may be heated. Meanwhile, the condensed refrigerant may be evaporated in the outdoor heat exchanger through the expansion valve and then collected to the compressor.

However, the heat pump system for an electric vehicle of the related art has the following problems.

First, in order to cool and heat and dehumidify the room, a plurality of three-way valves are provided and two or more indoor side heat exchangers are provided, resulting in a complicated system configuration. Accordingly, since the number and size of the components increase, it is difficult to apply the components to a limited installation space of the electric vehicle.

Second, a method to properly and flexibly utilize a surrounding environment of the electric vehicle according to various operation modes or required loads of the heat pump system is insufficient. Accordingly, it is difficult to expect to improve performance of a cycle by ensuring appropriate sub-cooling in the cooling or heating mode, which results excessive power consumption of the battery.

Third, it is difficult to optimally utilize waste heat generated in a coolant cycle (or circuit) of the vehicle for indoor air conditioning.

Fourth, it is difficult to reduce battery power consumption, while improving user's comfort.

Fifth, there is a limitation in cooling heat generated from the battery in an air cooling manner for reliability of battery performance.

Related art document information is as follows.
(Patent document 1) KR1020140097688 A, entitled Heat pump system for vehicle
(Patent document 2) KR1020130014535 A, entitled Heat pump system and control method thereof

### SUMMARY

An aspect of the present disclosure is directed to providing a heat pump system for an electric vehicle and a control method thereof which may solve the above problems.

In particular, an aspect of the present disclosure is directed to providing a heat pump system for an electric vehicle which may implement various operation modes for indoor air conditioning using a single auxiliary heat exchanger, and a control method thereof.

Another aspect of the present disclosure is directed to providing a heat pump system for an electric vehicle, which includes an auxiliary heat exchanger integrating functions of an accumulator and a sub-cooling heat exchanger to suit a narrow installation space of an electric vehicle and having a compact structure, and a control method thereof.

Another aspect of the present disclosure is directed to providing a heat pump system for an electric vehicle, which may detect an environmental change that may implement a more effective refrigerant cycle and provide an optimal operation mode suitable for the environment based on the detected environmental change, and a control method thereof.

Another aspect of the present disclosure is directed to providing a heat pump system for an electric vehicle, which may improve heating performance by utilizing a variety of heat sources in a heating mode, and a control method thereof.

Another aspect of the present disclosure is directed to providing a heat pump system for an electric vehicle, which may improve thermal comfort of an indoor occupant and reduce power consumption of a battery, and a control method thereof.

Another aspect of the present disclosure is directed to providing a heat pump system for an electric vehicle, which may perform comprehensive heat management on a refrigerant, which is a primary fluid of an electric vehicle, and a coolant, which is a secondary fluid of the electric vehicle, and a control method thereof.

Another aspect of the present disclosure is directed to providing a heat pump system for an electric vehicle, which may utilize waste heat generated in a coolant cycle of an electric vehicle, such as a power train, an on board charger, a battery, in a refrigerant cycle, and a control method thereof.

Another aspect of the present disclosure is directed to providing a heat pump system for an electric vehicle, which may variously select a heat source according to an environmental change in a heating mode, and a control method thereof.

Another aspect of the present disclosure is directed to providing a heat pump system for an electric vehicle, which may increase a driving distance per charge, and a control method thereof.

Another aspect of the present disclosure is directed to providing a heat pump system for an electric vehicle, which may cool a battery using a refrigerant, and a control method thereof.

To achieve these and other advantages and in accordance with the purpose of the disclosure, as embodied and broadly described herein, there is provided a heat pump system for an electric vehicle, including: a compressor configured to compress a refrigerant, a four-way valve configured to switch a flow direction of a refrigerant discharged from the compressor, an outdoor heat exchanger and an indoor heat exchanger having one side connected to a four-way valve, an auxiliary heat exchanger connected to the four-way valve by an accumulation pipe and having an internal space filled with a refrigerant of the accumulation pipe, an outdoor pipe extending from the other side of the outdoor heat exchanger, an indoor pipe extending from the other side of the indoor heat exchanger, and a flow pipe branched from an outdoor branch point of the outdoor pipe and extending to an indoor branch point of the indoor pipe.

The flow pipe may be provided to form a common sub-cooling line connected to the auxiliary heat exchanger. In addition, the common sub-cooling line may be formed to be branched between two flow valves.

Specifically, the heat pump system for an electric vehicle may further include a first auxiliary pipe branched from a flow branch point of the flow pipe and guiding a refrigerant to an inside of the auxiliary heat exchanger and a second auxiliary pipe connected to the first auxiliary pipe and guiding a refrigerant heat-exchanged with the refrigerant filling the internal space so as to be discharged from the auxiliary heat exchanger.

In addition, the flow pipe may be provided with a flow valve to reverse a flow allowance direction of the refrigerant with each other.

Specifically, the heat pump system for an electric vehicle may further include a first flow valve installed at the flow pipe to allow the refrigerant to flow from the outdoor branch point to the flow branch point and a second flow valve installed at the flow pipe to allow the refrigerant to flow from the indoor branch point to the flow branch point.

The flow valve may include a check valve.

Accordingly, the operation mode of various heat pump systems such as cooling, battery cooling, heating, dehumidification, defrosting, single heat source waste heat recovery, dual heat source waste heat recovery may be implemented using one auxiliary heat exchanger and the common sub-cooling line. That is, the configuration of the heat pump system for an electric vehicle may be simplified.

In addition, the indoor pipe may extend to the second auxiliary pipe.

In addition, the heat pump system may further include an indoor expansion valve installed at the indoor pipe so as to be located between the indoor branch point and the second auxiliary pipe.

In addition, the heat pump system for an electric vehicle may further include a power train line configured to guide a coolant to circulate to a power train module provided with a drive motor, a power train chiller installed at the power train line and configured to allow the coolant to pass therethrough, a common pipe having a first connection point formed at one end thereof to which the outdoor pipe is coupled and a second connection point formed at the other end thereof to which the second auxiliary pipe is coupled, a chiller pipe extending from the first connection point to the power train chiller, and a chiller recovery pipe extending from the power train chiller to the accumulation pipe and configured to guide a refrigerant heat-exchanged with the coolant at the power train chiller.

The heat pump system may further include an outdoor expansion valve installed at the outdoor pipe and positioned between the first connection point and the outdoor branch point, and a waste heat expansion valve installed at the chiller pipe.

In addition, the heat pump system may further include a chiller valve installed at the chiller recovery pipe.

In addition, the heat pump system may further include a radiator line branched from the power train line and configured to guide circulation of the coolant between the radiator and the power train module.

In addition, the heat pump system may further include a power train pump installed at the power train line to control circulation of the coolant and a radiator pump installed at the radiator line to control circulation of the coolant.

In addition, the power train line may include a chiller line circulating the power train chiller.

In addition, the power train line may be provided with a power train valve connected to each of the chiller line and the radiator line.

In addition, the heat pump system may further include a battery line configured to guide the coolant to circulate to the battery and a battery cooler provided to allow the coolant to pass therethrough.

In addition, the heat pump system may further include a cooler pipe extending from the second connection point to the battery cooler and a cooler recovery pipe extending from the battery cooler to the accumulation pipe and configured to guide a refrigerant heat-exchanged with the coolant at the battery cooler.

In addition, the heat pump system may further include a cooler expansion valve installed at the cooler pipe.

In addition, the heat pump system may further include a battery pump installed at the battery line to control circulation of the coolant.

In addition, the heat pump system may further include an indoor fan configured to blow air to the indoor heat exchanger, a heater configured to perform heating, a heater line configured to guide the coolant to circulate to the heater, and a heater core installed at the heater line and configured to be heated by the coolant passing through the heater.

In addition, the indoor air passing through the indoor heat exchanger by the air blown from the indoor fan is discharged to a room through the heater core. Accordingly, indoor heating may be continuously provided in a dehumidification or defrosting operation.

In addition, the auxiliary heat exchanger may include: a case configured to form an internal space, an intake pipe coupled to the accumulation pipe and extending from a lower surface of the internal space so as to be spaced apart upward, a discharge pipe configured to intake a gaseous coolant filling the internal space and collect the gaseous coolant to the compressor, an inlet pipe coupled to the first auxiliary pipe and extending to the lower surface of the internal space, a spiral pipe extending upward from the inlet pipe to surround the intake pipe several times, and an outlet pipe extending from an upper end of the spiral pipe and coupled to the second auxiliary pipe.

In another aspect, the heat pump system for an electric vehicle may include: a coolant line through which a coolant circulates to a power train module and a battery, a refrigerant line through which a refrigerant circulates to a compressor, an indoor heat exchanger, an outdoor heat exchanger, and a plurality of expansion valves, a power train chiller provided to allow the coolant line through which the coolant circulates to the power train module and the refrigerant line at which one of the plurality of expansion valves is installed to be heat-exchanged, and a battery cooler provided to allow the coolant line through which the coolant circulates to the battery and the refrigerant line at which the other of the plurality of expansion valves is installed to be heat-exchanged.

In addition, the plurality of expansion valves may further include: an outdoor expansion valve configured to expand the refrigerant flowing into the outdoor heat exchanger, and an indoor expansion valve configured to expand the refrigerant flowing into the indoor heat exchanger.

In addition, the outdoor expansion valve and the indoor expansion valve may be fully closed and at least one of one expansion valve and the other expansion valve may be opened in a first waste heat recovery mode in which the coolant circulating at least one of the power train module and the battery is used as a single heat source of refrigerant evaporation.

Further, the indoor expansion valve may be fully closed, the outdoor expansion valve may be opened, and at least one of one expansion valve and the other expansion valve may be opened in a second waste heat recovery mode in which the coolant and ambient air are used as heat sources of refrigerant evaporation.

In addition, the first waste heat recovery mode and the second waste heat recovery mode may be operated when a temperature of the coolant is higher than a coolant reference temperature defined based on a change in a viscous force.

In another aspect, a method of controlling a heat pump system for an electric vehicle which includes a refrigerant line through which a refrigerant circulates to a compressor, an indoor heat exchanger, an outdoor heat exchanger, and a plurality of expansion valves, a coolant line through which a coolant circulates to a power train module and a battery, a power train chiller and a battery cooler provided to allow the coolant line and the refrigerant line to be heat-exchanged, and a plurality of sensors, includes: calculating a target temperature of air discharged to a room based on a user setting temperature input by a user and an outdoor temperature, an indoor temperature, occupancy, and internal solar radiation detected by the plurality of sensors, determining one operation mode among a ventilation mode, a cooling mode, and a heating mode based on the calculated target temperature and the outdoor temperature, and determining a waste heat recovery mode in which the refrigerant is evaporated in at least one of the power train chiller and the battery cooler when the heating mode is determined.

In addition, the determining of the waste heat recovery mode may include determining whether a temperature of the coolant detected by the plurality of sensors is higher than a coolant reference temperature defined based on a change in a viscous force.

In addition, the determining of the waste heat recovery mode may further include determining whether the outdoor temperature is higher than a freezing point of the coolant when the temperature of the coolant is higher than the coolant reference temperature.

In addition, the method may further include: operating in a general heating mode in which the refrigerant is evaporated in the outdoor heat exchanger when the temperature of the coolant is lower than the coolant reference temperature.

In addition, the coolant reference temperature may be set to a temperature at which a viscous force of the coolant increases by 10%, relative to a viscous force at room temperature.

In addition, the method may further include: operating in a single heat source waste heat recovery mode in which only the coolant is used as a heat source of refrigerant evaporation when the outdoor temperature is higher than the melting point of the coolant, and operating in a dual heat source waste heat recovery mode in which the coolant and ambient air are used as heat sources of refrigerant evaporation when the outdoor temperature is lower than the melting point of the coolant.

According to the present disclosure, since the single auxiliary heat exchanger can be commonly utilized in various operation modes of the heat pump system for an electric vehicle, i.e., cooling, battery cooling, heating, defrosting, dehumidification, single heat source waste heat recovery (or "first waste heat recovery") and dual heat source waste heat recovery (or "second waste heat recovery") modes, the configuration of the heat pump system may be simplified and miniaturized.

In addition, the heat pump system may be reduced in weight by the auxiliary heat exchanger integrated with a function of an accumulator.

In addition, power consumption for heating and cooling may be reduced, while providing the same or more heating and cooling performance than the heat pump system for an electric vehicle of the related art. Therefore, it is possible to increase a driving distance per charge by minimizing battery power consumption and to improve comfort of an indoor occupant.

In addition, when an alternative refrigerant having a very low global warming index (GWP) such as carbon dioxide (CO₂) is applied to a vehicle due to international regulations on hydrogen fluorocarbon (HFC), the heat pump system employing the auxiliary heat exchanger according to an embodiment of the present disclosure may supplement the shortcomings of the alternative refrigerant whose pressure is too high in a high temperature environment, and thus, the heat pump system according to an embodiment of the present disclosure may be appropriate as a heat pump system of a future electric vehicle.

In addition, since sub-cooling of the refrigerant at the outlet side of the condenser is further increased by the auxiliary heat exchanger, a flash gas at the inlet side of the evaporator may be further reduced.

In addition, since the increase in the sub-cooling makes it possible to secure a relatively more latent heat of an evaporation section, the amount of heat of absorption during the evaporation process may be increased.

In addition, in the heating mode, a coolant, a coolant and ambient air, or ambient air may be selected as a heat source according to an environmental change of the heat pump system in which an outdoor temperature and a coolant temperature are used as variables, thus improving heating performance.

In addition, since various operation modes of the electric vehicle may be simply implemented by the common pipe, the auxiliary pipe, and the flow pipe, manufacturing cost may be lowered and economic efficiency may be enhanced.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a schematic diagram of a heat pump system for an electric vehicle according to an embodiment of the present disclosure.
FIG. 2 is a view showing a configuration of a heat pump system for an electric vehicle according to an embodiment of the present disclosure.
FIG. 3 is a view showing a configuration of an auxiliary heat exchanger according to an embodiment of the present disclosure.
FIG. 4 is a view showing a flow of a working fluid in a cooling mode of a heat pump system for an electric vehicle according to an embodiment of the present disclosure.
FIG. 5 is a view showing a flow of a working fluid in a battery cooling mode of a heat pump system for an electric vehicle according to an embodiment of the present disclosure.
FIG. 6 is a view showing a flow of a working fluid in a heating mode of a heat pump system for an electric vehicle according to an embodiment of the present disclosure.
FIG. 7 is a view showing a flow of a working fluid in a dehumidification mode of a heat pump system for an electric vehicle according to an embodiment of the present disclosure.
FIG. 8 is a view showing a flow of a working fluid in a first waste heat recovery mode of a heat pump system for an electric vehicle according to an embodiment of the present disclosure.
FIG. 9 is a view showing a flow of a working fluid in a second waste heat recovery mode of a heat pump system for an electric vehicle according to an embodiment of the present disclosure.
FIG. 10 is a P-h diagram showing a comparison of cycles according to the presence or absence of an auxiliary heat exchanger according to an embodiment of the present disclosure.
FIG. 11 is an experimental graph showing a comparison of changes in superheating and sub-cooling according to the presence or absence of an auxiliary heat exchanger according to an embodiment of the present disclosure.
FIG. 12 is an experimental graph showing a comparison of refrigerant mass flow rate and enthalpy difference of an evaporator according to the presence or absence of an auxiliary heat exchanger according to an embodiment of the present disclosure.
FIG. 13 is an experimental graph showing a comparison of a discharge pressure and an intake pressure of a compressor according to the presence or absence of an auxiliary heat exchanger according to an embodiment of the present disclosure.
FIG. 14 is an experimental graph showing a comparison of heating capacity and power consumption according to the presence or absence of an auxiliary heat exchanger according to an embodiment of the present disclosure.
FIG. 15 is an experimental graph showing a comparison of heating coefficients of performance (heating COP) and an improvement rate of the heating COP according to the presence or absence of an auxiliary heat exchanger according to an embodiment of the present disclosure.
FIG. 16 is a flowchart illustrating a control method for determining an operation mode of a heat pump system for an electric vehicle according to an embodiment of the present disclosure.
FIG. 17 is a flow chart showing a control method of a heating mode according to an embodiment of the present disclosure.
FIG. 18 is an experimental graph showing a change in viscosity of a coolant over temperature.

### DETAILED DESCRIPTION OF THE DISCLOSURE

Reference will now be made in detail to the embodiments of the present disclosure, examples of which are illustrated in the accompanying drawings. Wherever possible, the same reference numbers will be used throughout the drawings to refer to the same or like parts.

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present disclosure. Each of these terminologies is not used to define an essence, order or sequence of a corresponding component but used merely to distinguish the corresponding component from other component(s).

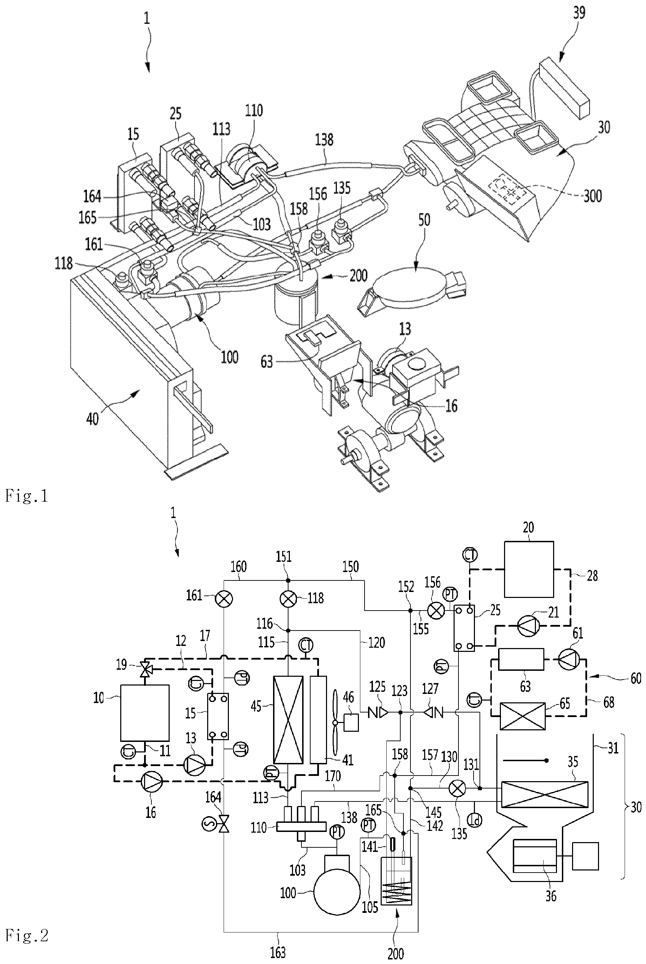

FIG. 1 is a schematic diagram of a heat pump system for an electric vehicle according to an embodiment of the present disclosure, and FIG. 2 is a view showing a configuration of a heat pump system for an electric vehicle according to an embodiment of the present disclosure.

Hereinafter, a heat pump system 1 for an electric vehicle according to the embodiment of the present disclosure is referred to as a "heat pump 1" for convenience of description.

Referring to FIGS. 1 and 2, the heat pump 1 according to an embodiment of the present disclosure may include a refrigerant line through which a refrigerant which is a primary fluid circulates and a coolant line through which a coolant which is a secondary fluid circulates. That is, the refrigerant and the coolant may be understood as working fluids of the heat pump 1.

The refrigerant may form a refrigerating cycle to provide cooling and heating to a room (or cabin). The coolant may be provided to a component that requires heat dissipation among electrical components of the electric vehicle.

That is, the coolant may perform a heat dissipation function to dissipate heat generated from a power train module 10 and a battery 20. For example, the coolant may be stored in a storage tank (not shown) provided in the electric vehicle. The coolant may be provided at each component that requires heat dissipation from the storage tank and may be recovered to the storage tank.

Meanwhile, the coolant provided to the power train module 10 to cool the power train module 10 may be referred to as a first coolant, and the coolant provided to the battery 20 to cool the battery 20 may be referred to as a second coolant.

The power train module 10 may include a drive motor generating a driving force of the electric vehicle and a reducer and an inverter connected to the drive motor.

The heat pump 1 may include a power train line 11 through which a coolant for cooling the power train module 10 circulates, a power train chiller 15 in which the coolant flowing through the power train line is heat-exchanged with a refrigerant, a chiller line 12 extending to allow to allow the coolant to circulate therethrough between the power train chiller 15 and the power train module 10, a power train pump 13 operating to provide the coolant to the chiller line 12, and a heat exchange module 40 installed on an outdoor side.

The power train line 11 may be provided to allow the coolant to pass therethrough to the power train module 10. That is, the power train line 11 may be understood as a pipe forming a coolant inlet and a coolant outlet of the power train module 10 to allow the coolant to circulate therethrough to the power train module 10.

That is, the power train line 11 may guide the coolant to circulate therethrough to the power train module 10.

The power train chiller 15 may allow a refrigerant expanded through a waste heat expansion valve 161 (to be described later) to be heat-exchanged with the high temperature coolant passing through the power train module 10.

The chiller line 12 may be connected to both sides of the power train line 11 penetrating through the power train module 10.

Specifically, the chiller line 12 connected to the power train line 11 located at an outlet of the power train module 10 may be coupled to a coolant inlet of the power train chiller 15. The chiller line 12 connected to the power train line 11 positioned at the inlet of the power train module 10 may be coupled to the coolant outlet of the power train chiller 15.

Therefore, the coolant absorbing heat, while passing through the power train module 10, may discharge heat, while passing through the power train chiller 15 through the chiller line 12.

The refrigerant passing through the power train chiller 15 may absorb heat of the coolant. That is, the refrigerant may use waste heat generated from the power train module 10 as a heat source. In first and second waste heat recovery modes (to be described later), the refrigerant may be evaporated using the waste heat as a heat source.

The chiller line 12 may be formed to extend from the power train line 11. That is, the chiller line 12 and the power train line 11 may be formed of an integral pipe. Therefore, the power train line 11 may include the chiller line 12.

In other words, the power train module 10 and the power train chiller 15 may be installed at the power train line 11 to circulate the coolant.

The power train pump 13 may be installed at the chiller line 12. For example, the power train pump 13 may be installed at the chiller line 12 connecting an outlet side of the power train module 10 and an inlet side of the power train chiller 15.

The power train pump 13 may operate so that the coolant passing through the power train module 10 flows into the chiller line 12. For example, when the power train pump 13 operates in an ON state, the coolant provided from the storage tank may circulate through the power train line 11 and the chiller line 12.

The outdoor heat exchange module 40 may include a radiator 41 releasing heat of coolant, an outdoor heat exchanger 45 exchanging heat with ambient air, and an outdoor fan 46 supplying air.

The coolant flowing through the power train line 11 may pass through the radiator 41. That is, the coolant flowing through the power train line 11 may pass through the radiator 41 and the power train chiller 15.

Specifically, the heat pump 1 may further include a radiator line 17 extending to allow the coolant to circulate between the radiator 41 and the power train module 10, a radiator pump 16 operating to provide the coolant to the radiator line 17,and a power train valve 19 limiting a flow of the coolant.

The radiator line 18 may be branched from one point of the power train line 11 and connected to the other point of the power train line 11 after passing through the radiator 41.

That is, the power train line 11 may form a branch point branched into the chiller line 12 and the radiator line 18 and form a junction point where the chiller line 12 and the radiator line 18 join. The branch point may be located at an outlet side of the power train module 10, and the junction point may be located at an inlet side of the power train module 10.

In addition, the power train valve 19 may be installed at the junction point. For example, the power train valve 19 may include a three-way valve. Therefore, the power train line 11, the chiller line 12, and the radiator line 17 may be connected to the power train valve 19.

The power train valve 19 may perform an opening and closing operation so that the coolant flowing through the chiller line 12 or the radiator line 17 is recovered to the power train line 11.

The radiator pump 16 may be installed at the radiator line 17. For example, the radiator pump 16 may be installed at the radiator line 17 connecting the outlet side of the power train module 10 and the inlet side of the radiator 41.

The radiator pump 16 may operate to allow the coolant passing through the power train module 10 to flow into the radiator line 17. For example, when the radiator pump 16 operates in an ON state, the coolant provided from the storage tank may circulate through the power train line 11 and the radiator line 17.

In view of the flow of the coolant, the radiator 41 may be installed at the radiator line 17. That is, the coolant may pass through the radiator 41 along the radiator line 17.

The radiator 41 may be located in front of the electric vehicle. Therefore, when the electric vehicle runs, cold air may enter the radiator 41 to cool the coolant absorbing the heat generated by the power train module 11.

The outdoor fan 46 may be located behind the radiator 41. Thus, the outdoor fan 46 may operate to prevent hot air from being stagnant behind the radiator 41.

The outdoor heat exchanger 45 may be located in front of the outdoor fan 46. The outdoor heat exchanger 45 may be located in front of or behind the radiator 41.

That is, the outdoor heat exchanger 45 may be located in front of the electric vehicle together with the radiator 41 to perform heat exchange between the ambient air and the refrigerant.

Meanwhile, the outdoor heat exchange module may be referred to as a condenser radiator fan module (CRFM).

The heat pump 1 may further include a battery line 28 through which the coolant for cooling the battery 20 circulates, a battery cooler 25 allowing the coolant flowing through the battery line 28 to exchange heat with the refrigerant, and a battery pump 21 operating to provide the coolant to the battery line 28.

The battery line 28 may extend so that the coolant circulates between the battery cooler 25 and the battery 20.

The battery pump 21 may be installed at the battery line 28.

The battery pump 21 may operate so that coolant circulates through the battery line 28 to perform heat dissipation of the battery 20. For example, when the battery pump 21 operates in an ON state, the coolant stored in the storage tank (not shown) may be provided to the battery line 28. The coolant may circulate through the battery line 28, while passing through the battery 20 and the battery cooler 25.

The battery cooler 25 may heat-exchange the refrigerant passing through a battery expansion valve 156 (to be described later) with the high temperature coolant passing through the battery 20.

The battery line 28 extends so that the outlet side of the battery 20 is connected to the coolant inlet of the battery cooler 25 and extends so that the coolant outlet of the battery cooler 25 is connected to the inlet side of the battery 20.

Therefore, the coolant absorbing heat through the battery 20 may be heat-exchanged with the refrigerant, while passing through the battery cooler 25 through the battery line 28, so as to be cooled.

The refrigerant passing through the battery cooler 25 may absorb heat of the coolant. That is, the refrigerant may use waste heat generated from the battery 20 as a heat source.

Therefore, although not shown in the drawings, in the first and second waste heat recovery modes (to be described later), the refrigerant using waste heat as a heat source may be evaporated not only through the power train chiller 15 but also the battery cooler 25 described above.

The heat pump 1 may further include an indoor heat exchange module 30 installed on the indoor side.

The indoor heat exchange module 30 may include an indoor duct 31 and an indoor heat exchanger 35 and an indoor fan 36 positioned inside the indoor duct 31.

The indoor fan 36 may provide air blowing. Therefore, the indoor fan 26 may discharge air into the interior of the electric vehicle or intake air in the room.

In addition, the indoor fan 36 may provide air bowing to heat-exchange the refrigerant passing through the indoor heat exchanger 35 with air.

The heat pump 1 may further include an indoor controller 39 that provides a user input unit.

The indoor controller 39 may be electrically connected to the indoor heat exchange module 30. For example, the indoor controller 39 may be connected to a controller 300 provided in the indoor heat exchanger module 30.

The user may input various operation modes of the heat pump 1 by operating the indoor controller 39.

For example, an operation mode selectable by the user among the operation modes of the heat pump 1 may be any one of cooling, heating, dehumidification, and ventilation. In addition, the controller 300 may operate a specific operation mode that may implement optimal thermal efficiency based on the indoor temperature, outdoor temperature, coolant temperature, refrigerant temperature, refrigerant pressure, and the like.

Here, the specific operation mode may include general heating, single heat source waste heat recovery (first waste heat recovery), double heat source waste heat recovery (second waste heat recovery), dehumidification heating, defrost heating, and battery cooling.

Meanwhile, the heat pump 1 further comprises a compressor 100 compressing the refrigerant, a four-way valve 110 switching a flow direction of the refrigerant, and an auxiliary heat exchanger 200 performing heat exchange between the refrigerants.

The compressor 100 may intake a low temperature, low pressure refrigerant and compress the same into a high temperature, high pressure refrigerant.

A gaseous refrigerant compressed to have high temperature and high pressure may be discharged to a discharge port of the compressor 100. In addition, a low temperature, low pressure gaseous refrigerant may be intaken into an intake port of the compressor 100.

The discharge port of the compressor 100 may be coupled to a discharge pipe 103. The discharge pipe 103 may extend to the four-way valve 110.

The auxiliary heat exchanger 200 may guide heat exchange between the condensation refrigerant passing through the condenser and the evaporative refrigerant passing through the evaporator. The evaporative refrigerant is a relatively low temperature, low pressure refrigerant, the condensation refrigerant is a relatively high temperature, high pressure refrigerant.

Accordingly, the condensation refrigerant may be sub-cooled. That is, the auxiliary heat exchanger 200 may perform a sub-cooling function.

In addition, the auxiliary heat exchanger 200 may perform an accumulator function to separate the evaporative refrigerant flowing thereto into a gaseous refrigerant and a liquid refrigerant and allow the gaseous refrigerant to flow into the compressor 100. The liquid refrigerant in the evaporative refrigerant having a relatively low temperature may be further evaporated through heat exchange with the condensation refrigerant. Therefore, the amount of gaseous refrigerant intaken into the compressor 100 may be relatively increased.

In the heat pump system provided in the electric vehicle, a heat transfer area of the indoor heat exchanger may be relatively small. Therefore, the auxiliary heat exchanger 200 may be utilized as a kind of a buffer space (receiver tank) function of the liquid refrigerant.

Meanwhile, the auxiliary heat exchanger 200 may be referred to as "accumulator integrated internal heat exchanger." A detailed configuration of the auxiliary heat exchanger 200 will be described later.

The intake port of the compressor 100 may be coupled to the intake pipe 103. The intake pipe 103 may extend to the auxiliary heat exchanger 200 so that the gaseous refrigerant flows into the compressor 100.

The four-way valve 110 may guide the refrigerant flowing from the discharge pipe 103 to selectively flow to the outdoor heat exchanger 45 or the indoor heat exchanger 35 operating as a condenser according to an operation mode.

Specifically, an outdoor connection pipe 113 extending to one side of the outdoor heat exchanger 45 and an indoor connection pipe 138 extending to one side of the indoor heat exchanger 35 may be coupled to the four-way valve 110.

In addition, the four-way valve 110 may guide the refrigerant to flow into the auxiliary heat exchanger 200. Specifically, an accumulation pipe 170 extending to the auxiliary heat exchanger 200 may be coupled to the four-way valve 110.

The accumulation pipe 170 may include a cooler junction point 158 coupled to the cooler recovery pipe 157 (to be described later) and a chiller junction point 165 coupled to the chiller recovery pipe 163 (to be described later).

That is, the cooler junction point 158 and the chiller junction point 165 may be understood as points at which the evaporative refrigerant joins the accumulation pipe 170 to flow to the auxiliary heat exchanger 200.

The cooler junction point 158 may guide the refrigerant evaporated, while passing through the battery cooler 25 to the auxiliary heat exchanger 200 through the accumulation pipe 170.

The chiller junction point 165 may guide the refrigerant evaporated, while passing through the power train chiller 15 to the auxiliary heat exchanger 200 through the accumulation pipe 170.

The heat pump 1 may include an outdoor pipe 115 extending from the other side of the outdoor heat exchanger 45 and an indoor pipe 130 extending from the other side of the indoor heat exchanger 35.

The outdoor heat exchanger 45 may be coupled to the outdoor connection pipe 113 and the outdoor pipe 115 on both sides to guide the refrigerant. That is, the outdoor pipe 115 and the outdoor connection pipe 113 may be coupled to a refrigerant outlet and a refrigerant inlet of the outdoor heat exchanger 45, respectively. For example, when the outdoor heat exchanger 45 operates as a condenser, the outdoor connection pipe 113 allows the compressed refrigerant to flow into the outdoor heat exchanger 45, and the refrigerant condensed in the outdoor heat exchanger 45 is discharged to the outdoor pipe 115.

The indoor heat exchanger 35 may be coupled to the indoor connection pipe 138 and the indoor pipe 130 on both sides to guide the refrigerant. That is, the indoor pipe 130 and the indoor connection pipe 138 may be coupled to a refrigerant outlet and a refrigerant inlet of the indoor heat exchanger 35, respectively. For example, when the indoor heat exchanger 35 operates as a condenser, the indoor connection pipe 138 allows the compressed refrigerant to flow into the indoor heat exchanger 35, and the refrigerant condensed in the indoor heat exchanger 35 is discharged to the indoor pipe 130.

The heat pump 1 may further include a flow pipe 120 branched from the outdoor pipe 115 and extending to the indoor pipe 130.

Specifically, the flow pipe 120 may extend from an outdoor branch point 116 formed at one point of the outdoor pipe 115 to an indoor branch point 131 formed at one point of the indoor pipe 130.

The outdoor branch point 116 may be understood as a point where the refrigerant of the outdoor pipe 115 is branched. The indoor branch point 131 may be understood as a point where the refrigerant of the indoor pipe 130 is branched.

In other words, the indoor pipe 130 is branched from the flow pipe 120 connected to the indoor heat exchanger 35 and extends to a second auxiliary pipe 142 connected to the auxiliary heat exchanger 200.

The flow pipe 120 may include a flow branch point 123 where the condensation refrigerant joins.

The flow branch point 123 may guide the refrigerant passing through the outdoor heat exchanger 45 or the indoor heat exchanger 35 operating as a condenser according to an operation mode to flow into the auxiliary heat exchanger 200. For example, the flow branch point 123 may be coupled to the auxiliary pipe 141 extending to the auxiliary heat exchanger 200.

The heat pump 1 may further include a first flow valve 125 and a second flow valve 127 controlling a refrigerant flow of the flow pipe 120.

The first flow valve 125 and the second flow valve 127 may be installed at the flow pipe 120.

The first flow valve 125 may be installed between the outdoor branch point 116 and the flow branch point 123. The first flow valve 125 may control the refrigerant flowing between the outdoor branch point 116 and the flow branch point 123.

The second flow valve 127 may be installed between the flow branch point 123 and the indoor branch point 131. The second flow valve 127 may control the refrigerant flowing between the flow branch point 123 and the indoor branch point 131.

The first flow valve 125 and the second flow valve 127 may operate to allow the refrigerant flowing through the flow pipe 120 to flow to the auxiliary heat exchanger 200 through the auxiliary pipe 141 from the flow branch point 123.

That is, the first flow valve 125 and the second flow valve 127 may control a flow direction of the refrigerant in the flow pipe 120.

Meanwhile, the first flow valve 125 and the second flow valve 127 may be referred to as a "flow valve" together.

The flow valves 125 and 127 may include a check valve, a solenoid valve, an electromagnetic valve, and the like.

For convenience of explanation and understanding, in the embodiment of the present disclosure, it is assumed that the flow valves 125 and 127 are provided as check valves allowing a flow of the refrigerant in only one direction.

The first flow valve 125 and the second flow valve 127 may be installed so that allowed flow directions of the refrigerant are the opposite to each other.

Specifically, the first flow valve 125 allows a flow of the refrigerant from the outdoor branch point 116 to the flow branch point 123. However, the first flow valve 125 blocks a flow of the refrigerant from the flow branch point 123 to the outdoor branch point 116.

In addition, the second flow valve 127 allows a flow of the refrigerant from the indoor branch point 131 toward the flow branch point 123. However, the second flow valve 127 blocks a flow of the refrigerant from the flow branch point 123 to the indoor branch point 131.

Accordingly, regardless of the outdoor heat exchanger 45 or the indoor heat exchanger 35 operating as a condenser according to the operation mode, the condensation refrigerant may flow into the first auxiliary pipe 141 and may be sub-cooled, while passing through the auxiliary heat exchanger 200.

The heat pump 1 may further include the first auxiliary pipe 141 branched from one point of the flow pipe 120 and extending to the auxiliary heat exchanger 200 and the second auxiliary pipe 142 extending from the auxiliary heat exchanger 200 toward the expansion valves 161, 118, 156, and 135.

The refrigerant flowing into the auxiliary heat exchanger 200 through the first auxiliary pipe 141 may be heat-exchanged at the auxiliary heat exchanger 200 and then discharged from the heat exchanger 200 through the second auxiliary pipe 142.

That is, the first auxiliary pipe 141 and the second auxiliary pipe 142 may be connected to each other. For example, the first auxiliary pipe 141 and the second auxiliary pipe 142 may form an integral pipe by an inlet pipe 241, a spiral pipe 245 and an outlet pipe 242 (to be described later) in the auxiliary heat exchanger 200.

The first auxiliary pipe 141 may extend from the flow branch point 123 to the auxiliary heat exchanger 200. Therefore, the first auxiliary pipe 141 may guide the condensation refrigerant passing through the condenser to flow into the auxiliary heat exchanger 200.

As described above, the condensation refrigerant may be heat-exchanged with the evaporative refrigerant in the auxiliary heat exchanger 200 so as to be sub-cooled. The sub-cooled refrigerant may be discharged from the auxiliary heat exchanger 200 through the second auxiliary pipe 142. That is, the second auxiliary pipe 142 may guide the refrigerant of the first auxiliary pipe 141 passing through the auxiliary heat exchanger 200.

The second auxiliary pipe 142 may extend from the auxiliary heat exchanger 200 to a common pipe 150 (to be described later).

In addition, the second auxiliary pipe 142 may include an auxiliary branch point 145 to which the indoor pipe 130 is coupled.

The auxiliary branch point 145 may be understood as a branch point where the refrigerant flowing through the second auxiliary pipe 142 is branched to the indoor pipe 130. That is, the indoor pipe 130 may be branched from the second auxiliary pipe 142 and extend to the indoor heat exchanger 35.

The heat pump 1 may further include the common pipe 150 connecting the second auxiliary pipe 142 and the outdoor pipe 115.

One end of the common pipe 150 is defined as a first connection point 151 and the other end of the common pipe 150 is defined as a second connection point 152.

The outdoor pipe 115 may be coupled to the first connection point 151. That is, one end of the outdoor pipe 115 is coupled to the outdoor heat exchanger 45 and the other end of the outdoor pipe 115 is coupled to the common pipe 150. Here, the outdoor branch point 116 may be located between the outdoor heat exchanger 45 and the common pipe 150.

In addition, the chiller pipe 160 may be coupled to the first connection point 151. That is, the first connection point 151 may be understood as a branch point where the refrigerant is branched.

In other words, the common pipe 150 may be branched to the outdoor pipe 115 and the chiller pipe 160 from the first connection point 151.

In other words, the chiller pipe 160 may be branched from the outdoor pipe 115 to extend to the power train chiller 15.

The second auxiliary pipe 142 may be coupled to the second connection point 152. That is, one end of the second auxiliary pipe 142 is coupled to the auxiliary heat exchanger 200 and the other end of the second auxiliary pipe 142 is coupled to the common pipe 150.

Here, the auxiliary branch point 145 may be located between the indoor heat exchanger 35 and the common pipe 150.

In addition, a cooler pipe 155 may be coupled to the second connection point 152. That is, the second connection point 152 may be understood as a branch point where the refrigerant is branched. In other words, the common pipe 150 may be branched from the second connection point 152 to the second auxiliary pipe 142 and the cooler pipe 155.

The heat pump 1 may further include an outdoor expansion valve 118 installed at the outdoor pipe 115 and an indoor expansion valve 135 installed at pipe 130 installed at the indoor pipe 130.

The outdoor expansion valve 118 and the indoor expansion valve 135 may include an electronic expansion valve (EEV).

The outdoor expansion valve 118 and the indoor expansion valve 135 may adjust a pressure and a flow rate of the refrigerant through opening control.

The outdoor expansion valve 118 may be located between the outdoor branch point 116 and the first connection point 151. Accordingly, the refrigerant flowing in the common pipe 150 in the heating mode may flow into the outdoor pipe 115 and be expanded at the outdoor expansion valve 118.

The indoor expansion valve 135 may be located between the auxiliary branch point 145 and the indoor branch point 131. Accordingly, the refrigerant flowing through the second auxiliary pipe 142 in the cooling mode may flow into the indoor pipe 130 and be expanded by the indoor expansion valve 135.

The heat pump 1 may further include a cooler pipe 155 and a cooler recovery pipe 157 guiding the refrigerant for heat exchange between the refrigerant and the coolant at the battery cooler 25.

The cooler pipe 155 may be branched from the common pipe 150 and extend to the battery cooler 25. Specifically, the cooler pipe 155 may extend from the second connection point 152 to a refrigerant inlet formed at one side of the battery cooler 25.

In other words, the common pipe 150 may be branched from the second connection point 152 to the second auxiliary pipe 142 and the cooler pipe 155.

The cooler recovery pipe 157 may extend from the battery cooler 25 to the accumulation pipe 170. Specifically, the cooler recovery pipe 157 may extend from a refrigerant outlet formed at the other side of the battery cooler 25 to the cooler junction point 158.

That is, the cooler pipe 155 and the cooler recovery pipe 157 may guide the refrigerant heat-exchanged with the coolant circulating through the battery line 28 at the battery cooler 25. For example, in the heating mode, the refrigerant flowing through the cooler pipe 155 flow into the refrigerant inlet of the battery cooler 25 through the cooler pipe 155 and absorb heat of the coolant flowing into the coolant inlet of the battery cooler 25. Accordingly, the refrigerant passing through the battery cooler 25 may be evaporated.

In addition, the refrigerant absorbing heat of the coolant may be discharged to the cooler recovery pipe 157 through the refrigerant outlet of the battery cooler 25. In addition, the coolant of the cooler recovery pipe 157 may flow from the cooler junction point 158 to the accumulation pipe 170 and flow into the auxiliary heat exchanger 200.

The heat pump 1 may further include the cooler expansion valve 156 installed at the cooler pipe 155.

The cooler expansion valve 156 may include an electronic expansion valve (EEV).

The cooler expansion valve 156 may adjust a pressure and a flow rate of the refrigerant flowing through the cooler pipe 155 through opening control. For example, when the cooler expansion valve 156 is closed in the heating mode, the refrigerant flowing through the second auxiliary pipe 142 may not be branched from the second connection point 152 to the common pipe 150 and the cooler pipe 155 but entirely flow to the common pipe 150.

The heat pump 1 may further include a chiller pipe 160 and a chiller recovery pipe 163 for guiding the refrigerant, a waste heat expansion valve 161 installed at the chiller pipe 160, and a chiller valve 164 installed at the chiller recovery pipe 163.

The chiller pipe 160 may be branched from the common pipe 150 and extend to the power train chiller 15. Specifically, the chiller pipe 160 may extend from the first connection point 151 to the refrigerant inlet formed at one side of the power train chiller 15.

In other words, the common pipe 150 may be branched to the chiller pipe 160 and the outdoor pipe 115 from the first connection point 151. That is, the chiller pipe 160 and the outdoor pipe 115 may be coupled one end of the common pipe 150 and the cooler pipe 155 and the second auxiliary pipe 142 are coupled to the other end of the common pipe 150.

The chiller recovery pipe 163 may extend from the power train chiller 15 to the accumulation pipe 170. Specifically, the chiller recovery pipe 163 may extend from a refrigerant outlet formed at the other side of the power train chiller 15 to the chiller junction point 165.

That is, the chiller pipe 160 and the chiller recovery pipe 163 may guide the refrigerant heat-exchanged with the coolant circulating through the chiller line 12 at the power train chiller 15.

For example, in the heating mode, the refrigerant flowing through the common pipe 150 may flow into the refrigerant inlet of the power train chiller 15 through the chiller pipe 160 and absorb heat of the coolant flowing into the cooling inlet of the power train chiller 15. Accordingly, the refrigerant passing through the power train chiller 15 may be evaporated.

The refrigerant absorbing heat of the coolant may be discharged to the chiller recovery pipe 163 through the refrigerant outlet of the power train chiller 15.

The refrigerant at the chiller recovery pipe 163 may flow from the chiller junction point 165 to the accumulation pipe 170 and flow into the auxiliary heat exchanger 200.

The waste heat expansion valve 161 may be located between the first connection point 151 and the refrigerant inlet of the power train chiller 15.

The waste heat expansion valve 161 may include an electronic expansion valve (EEV).

The waste heat expansion valve 161 may adjust a pressure and a flow rate of the refrigerant flowing through the chiller pipe 160 through opening control.

The chiller valve 164 may be located between the chiller junction point 165 and the refrigerant outlet of the power train chiller 15.

The chiller valve 164 may include a solenoid valve.

The chiller valve 164 may be installed at the chiller recovery pipe 163 to prevent a backflow of the refrigerant and to protect the power train chiller 15. The chiller valve 164 may limit the refrigerant flow of the chiller recovery pipe 163 through an ON/OFF operation.

Meanwhile, the heat pump 1 may further include a room heater 60 for providing continuous heating to the room in a dehumidification or defrost mode.

The room heater 60 may operate to maintain heating in the room when operated in the dehumidification or defrost mode during the heating operation.

Specifically, the room heater 60 may include a heater 63 generating heat, a heater line 68 through which the coolant for absorbing heat of the heater 63 circulates, a heater pump causing the coolant to flow into the heater line 68, and a heater core 65 heated by the coolant passing through the heater 63.

The heater pump 61 may be installed at the heater line 68. In addition, the heater pump 61 may guide the flow of the coolant to dissipate heat from the heater 63. For example, the heater pump 61 may operate to cause the coolant stored in the storage tank (not shown) to flow into the heater line 68.

The heater 63 may include an electric heater. In the process of passing through the heater 63, the coolant may absorb heat generated by the heater 63, and thus a temperature thereof may increase.

The heater core 65 may be installed at the heater line 68. For example, the heater core 65 may be formed of a metal plate having high thermal conductivity.

The coolant passing through the heater 63 may heat the heater core 65, while passing through the heater core 65. Here, air may be blown to pass through the heater core 65 having a high temperature. For example, air blowing may be generated by an operation of the indoor fan 36.

The warm air passing through the heater core 65 may be discharged into the room. Accordingly, the room may be provided with continuous heating even in a dehumidification or defrost mode in which the indoor heat exchanger 35 performs the function of an evaporator.

Meanwhile, the heat pump 1 may include a plurality of sensors PT and CT installed at the refrigerant line through which the refrigerant circulates and the coolant line through which the coolant circulates as described above.

The plurality of sensors may detect a state of the refrigerant or the coolant. For example, the plurality of sensors may include a refrigerant sensor PT detecting a pressure and a temperature of the refrigerant and a coolant sensor CT detecting a temperature of the coolant.

The plurality of sensors may provide information detecting a state of the coolant and the refrigerant to a controller 300. The controller 300 may be a microprocessor, an integrated circuit, or a logical electrical circuit.

In addition, the heat pump 1 may further include an outdoor temperature sensor detecting an outdoor temperature, an indoor temperature sensor detecting an indoor temperature of the electric vehicle, a solar radiation sensor measuring the amount of solar radiation incident on the interior of the electric vehicle, and a passive infrared (PIR) sensor (i.e., a human body sensor) detecting occupancy.

The outdoor temperature sensor, the indoor temperature sensor, the solar radiation sensor, and the PIR sensor may provide sensing information to the controller 300.

Meanwhile, the heat pump 1 may further include a surge tank 50.

The surge tank 50 may be formed to have a predetermined volume for heat dissipation of the drive motor. In addition, the surge tank 50 may be filled with air. Therefore, the surge tank 50 may be utilized in the heating mode for recovering waste heat generated in the power train module 10.

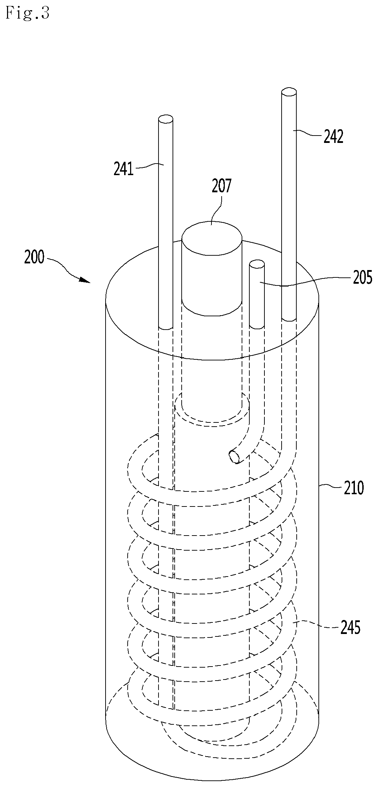

FIG. 3 is a view showing a configuration of an auxiliary heat exchanger according to an embodiment of the present disclosure.

Referring to FIG. 3, the auxiliary heat exchanger 200 may include a case 210 forming an appearance, a discharge pipe 205 coupled to the intake pipe 105, an intake pipe 207 coupled to the accumulation pipe 170, an inlet pipe 241 coupled to the first auxiliary pipe 141, an outlet pipe 242 coupled to the second auxiliary pipe 142, and a spiral pipe 245 connecting the inlet pipe 241 and the outlet pipe 242 in the case 210.

The case 210 may form an internal space in which the introduced refrigerant may be separated in phase. For example, the case 210 may include a cylindrical shape.

The intake pipe 207 may extend to a lower side of the internal space through an upper surface of the case 210. For example, the intake pipe 207 may extend along a central axis of the case 210.

The upper end of the intake pipe 207 may be coupled to the accumulation pipe 170.

A lower end of the intake pipe 207 may be spaced apart above a lower surface of the case 210. Therefore, the refrigerant flowing into the intake pipe 207 through the accumulation pipe 170 may be discharged to the lower surface of the case 210 and fill the internal space.

The refrigerant discharged from the intake pipe 207 to the internal space may be separated into a liquid refrigerant and a gaseous refrigerant in the internal space. In addition, the gaseous refrigerant may flow into the discharge pipe 205 and may be recovered to the compressor 100 through the intake pipe 105.

The discharge pipe 205 may extend to the internal space through the upper surface of the case 210.

The upper end of the discharge pipe 205 may be coupled to the intake pipe 105.

A lower end of the discharge pipe 205 may be located above the internal space. For example, the lower end of the discharge pipe 205 may be located above an upper end of the spiral pipe 245.

In addition, the lower end of the discharge pipe 205 may extend to be rounded in one direction and may form an opening so that the gaseous refrigerant filling the internal space is introduced. Therefore, the gaseous refrigerant flowing into the discharge pipe 205 may flow into the intake pipe 105.

The auxiliary heat exchanger 200 may perform heat exchange between refrigerants to supercool the condensation refrigerant.

The inlet pipe 241 may extend to a lower side of the internal space through an upper surface of the case. For example, the inlet pipe 241 may extend downward in an extending direction of the intake pipe 207.

The upper end of the inlet pipe 241 may be coupled to the first auxiliary pipe 141.

The lower end of the inlet pipe 241 may be coupled to the spiral pipe 245.

The spiral pipe 245 may extend upward from a lower side of the internal space to surround the inlet pipe 241 and/or the intake pipe 207 a plurality of times from the outside. For example, the spiral pipe 245 may extend upward to have a helical shape.

Accordingly, the condensation refrigerant flowing through the spiral pipe 245 may be heat-exchanged with the evaporative refrigerant discharged from the intake pipe 207 to the internal space. Therefore, the condensation refrigerant having a relatively high temperature may be sub-cooled by heat exchange with the relatively low temperature evaporative refrigerant.

In addition, the evaporative refrigerant may be heat exchanged with the condensation refrigerant having a relatively high temperature to evaporate the remaining liquid refrigerant as a gaseous refrigerant. As a result, the amount of the gaseous refrigerant recovered by the compressor 100 may be increased.

The spiral pipe 245 may be located in the internal space. Also, an upper end of the spiral pipe 245 may be coupled to the outlet pipe 242.

The outlet pipe 242 may extend upwardly through the upper surface of the case 210 from the spiral pipe 245. An upper end of the outlet pipe 242 may be coupled to the second auxiliary pipe 142.

Meanwhile, according to the auxiliary heat exchanger 200, it is possible to increase sub-cooling of the condensation refrigerant to reduce a flash gas defined as a refrigerant gas evaporated from a non-evaporator.

The flash gas is a gas that causes a decrease in performance due to loss of a flow rate of the refrigerant supplied to the evaporator and the amount of latent heat. Therefore, since the auxiliary heat exchanger 200 further secure the sub-cooling of the condensation refrigerant relatively and provide the same to the expansion valves 118, 135, 156, 161, and 118, thereby reducing the flash gas.

In addition, the increase in the sub-cooling of the condensation refrigerant may further increase a liquid ratio of the refrigerant at the inlet side of the evaporator. Accordingly, the amount of intaken heat is advantageously increased during the evaporation process.

Meanwhile, the increase in the sub-cooling of the condensation refrigerant disadvantageously increases superheating.

The increase in the superheating may increase a temperature of the refrigerant intaken into the compressor 100 to cause cylinder overheating and lubricating oil burn shape. Therefore, it is important to increase the sub-cooling to a sufficient, appropriate level.

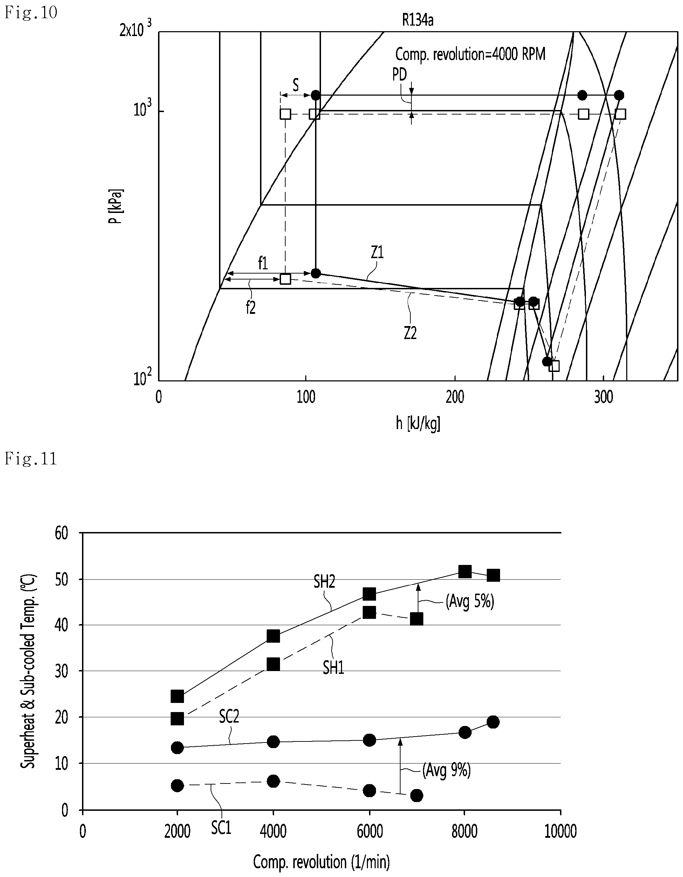

The auxiliary heat exchanger 200 according to an embodiment of the present disclosure may implement an optimal increase in sub-cooling so that the negative effect of the increase in superheating may be canceled out. In addition, the auxiliary heat exchanger 200 may be provided such that the performance improvement due to the increase in the sub-cooling is significantly higher than the effect of the superheating (See FIG. 11).

The plurality of sensors PT and CT installed at the heat pump 1 provide detection information of a working fluid to the controller 300, and the controller 300 may control to maintain an appropriate sub-cooling based on the detection information.

Hereinafter, a flow and a cycle of a working fluid according to an operation mode of the heat pump 1 according to the embodiment of the present disclosure will be described. Here, the working fluid includes a refrigerant defined as a primary fluid and a coolant defined as a secondary fluid.

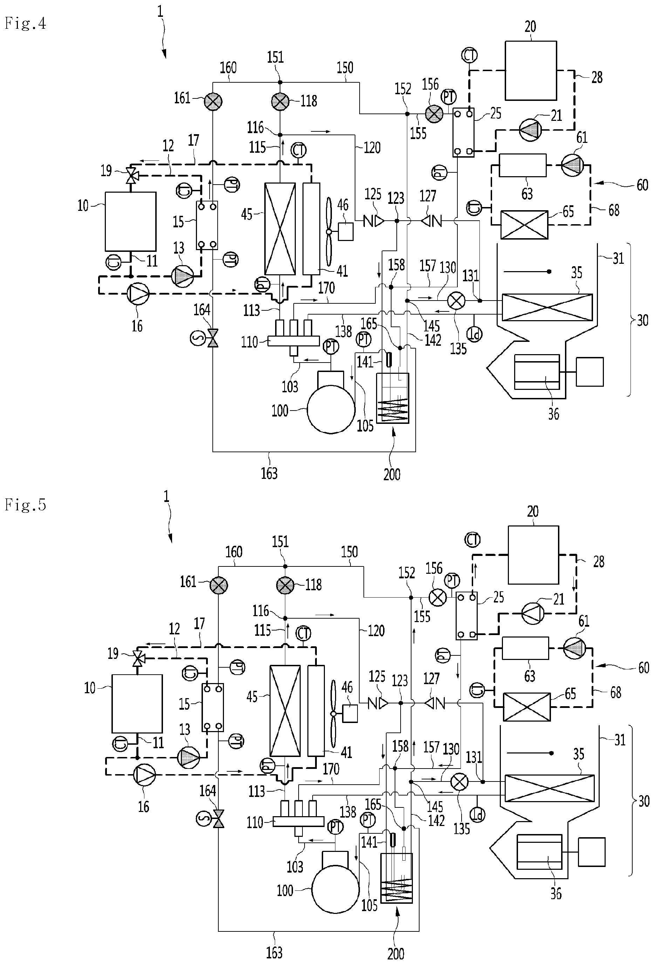

For convenience of explanation and understanding, the plurality of pumps 13, 16, 21, and 61 and the plurality of valves 118, 135, 156, 161, and 164 described above with reference to FIGS. 4 to 9 are shown to indicate ON or OFF depending on coloration (shading). That is, a pump or a valve colored in the drawing indicates the OFF state and a pump or a valve not colored in the drawing indicates the ON state.

FIG. 4 is a view showing a flow of a working fluid in a cooling mode of a heat pump system for an electric vehicle according to an embodiment of the present disclosure.

Referring to FIG. 4, when the operation mode of the heat pump 1 is the cooling mode, the outdoor expansion valve 118, the waste heat expansion valve 161, and the cooler expansion valve 156 may be fully closed. The chiller valve 164 may also be closed.

The indoor expansion valve 135 may be open. The indoor expansion valve 135 may expand the refrigerant passing therethrough by opening control.

Meanwhile, in general, the cooling mode of the electric vehicle may be operated in a season, a weather, etc., in which an outdoor temperature is high. Therefore, the electric component provided in the power train module 10 may perform heat dissipation relatively frequently. For example, the radiator pump 16 may be turned on in the cooling mode.

When the radiator pump 16 is in the ON state, the coolant may circulate through the radiator line 17 to cool the power train module 10.

In addition, the coolant absorbing heat generated by the power train module 10 may be cooled by heat exchange with ambient air in the radiator 41.

Meanwhile, the power train pump 13 and the battery pump 21 may operate together according to the operation of the waste heat expansion valve 161 and the cooler expansion valve 156. Therefore, the power train pump 13 and the battery pump 21 may not operate (OFF). In the cooling mode, the heater pump 61 does not operate (OFF).

Of course, the power train module 10 and the battery 20, without being dependent upon the cooling mode or the heating mode, may determine whether heat dissipation is necessary and perform heat dissipation by the circulation of the coolant as necessary. In this case, whether the heat dissipation is necessary may be determined whether a predetermined condition is satisfied.

In addition, the power train module 10 may operate the power train pump 13 when heat exchange with a refrigerant is required, and operate the radiator pump 16 when heat exchange with ambient air is required.

That is, the coolant circulating through the power train module 10 may be selected to exchange heat with the refrigerant and/or ambient air as necessary.

However, in FIG. 4, for convenience of description, it is assumed that the battery 20 does not need heat dissipation and the coolant circulating through the power train module 10 is cooled through ambient air.

A high-temperature, high-pressure compressed refrigerant discharged from the compressor 100 may flow into the outdoor heat exchanger 45 via the four-way valve 110.

The outdoor heat exchanger 45 may cause the ambient air and the compressed refrigerant to exchange heat with each other by driving of the electric vehicle and/or outdoor fan 46. Therefore, the refrigerant passing through the outdoor heat exchanger 45 is condensed, and the condensation refrigerant may flow into the flow pipe 120 through the outdoor pipe 115.

The condensation refrigerant flowing into the flow pipe 120 flows into the first auxiliary pipe 141 through the first flow valve 125. Here, the second flow valve 127 restricts a flow direction of the condensation refrigerant so that the condensation refrigerant may not flow toward the indoor branch point 131.

The condensation refrigerant flowing into the first auxiliary pipe 141 may be sub-cooled by heat exchange with the evaporative refrigerant at the auxiliary heat exchanger 200.

Specifically, the condensation refrigerant of the first auxiliary pipe 141 may be heat-exchanged with the evaporative refrigerant in a gaseous and/or liquid state filling the internal space of the case 210 so as to be sub-cooled, while flowing through the inlet pipe 241, the spiral pipe 245, and outlet pipe 242 in turn.

The sub-cooled refrigerant may flow to the second auxiliary pipe 142 through the outlet pipe 242 and flow into the indoor pipe 130.

The sub-cooled refrigerant flowing into the indoor pipe 130 may be expanded, while passing through the indoor expansion valve 135. The expanded refrigerant may flow into the indoor heat exchanger 35.

The expanded refrigerant may be evaporated by heat exchange with air by the indoor fan 36 in the indoor heat exchanger 25. The evaporated refrigerant may be discharged through the indoor connection pipe 138. The evaporative refrigerant of the indoor connection pipe 138 flows into the accumulation pipe 170 via the four-way valve 110. In addition, the evaporative refrigerant flowing into the accumulation pipe 170 may exchange heat with the condensation refrigerant at the auxiliary heat exchanger 200.

Specifically, the evaporative refrigerant flowing into the intake pipe 207 through the accumulation pipe 170 may be discharged to the internal space of the case 210. Therefore, the internal space of the case 210 may be filled with the evaporative refrigerant in liquid and gaseous states.

Here, the evaporative refrigerant may absorb heat of the condensation refrigerant passing through the spiral pipe 245. Therefore, the evaporative refrigerant in the liquid state may be evaporated in a gas phase. Evaporative refrigerant in a gaseous state flows into the discharge pipe 205.

The evaporative refrigerant flowing into the discharge pipe 205 may be recovered to the intake side of the compressor 100 through the intake pipe 105, thereby forming a cycle.

FIG. 5 is a view showing a flow of a working fluid in a battery cooling mode of a heat pump system for an electric vehicle according to an embodiment of the present disclosure. Specifically, FIG. 5 is a view illustrating a flow of a coolant and a refrigerant for cooling a battery while operating in a cooling mode.

Referring to FIG. 5, based on the cooling mode described above, the battery pump 21 in the battery cooling mode may be operated (ON). The cooler expansion valve 156 may be opened.

By the operation (ON) of the battery pump 21, the coolant may circulate through the battery line 28. The coolant may absorb heat generated from the battery 20 to cool the battery.

The coolant absorbing heat generated from the battery 20 may be cooled in the battery cooler 25.

Specifically, when the cooler expansion valve 156 is opened, the sub-cooled refrigerant flowing through the second auxiliary pipe 142 may be branched into the indoor pipe 130 and the cooler pipe 155.

The refrigerant branched into the cooler pipe 155 may be expanded, while passing through the cooler expansion valve 156, and then flow into the battery cooler 25. Therefore, in the battery cooler 25, the relatively high temperature coolant may be heat-exchanged with the relatively low temperature refrigerant.

That is, the low temperature refrigerant is evaporated by absorbing heat of the coolant, and the high temperature coolant may be cooled by releasing heat to the low temperature refrigerant.

The evaporative refrigerant passing through the battery cooler 25 may flow into the accumulation pipe 170 through the cooler recovery pipe 157. That is, the evaporative refrigerant flowing through the cooler recovery pipe 157 joins the evaporative refrigerant passing through the indoor heat exchanger 35 at the cooler junction point 165 and flow into the auxiliary heat exchanger 200 through the accumulation pipe 170. It may flow into the machine 200.

The joined evaporative refrigerant may be heat-exchanged with the condensation refrigerant in the auxiliary heat exchanger 200 as described above.

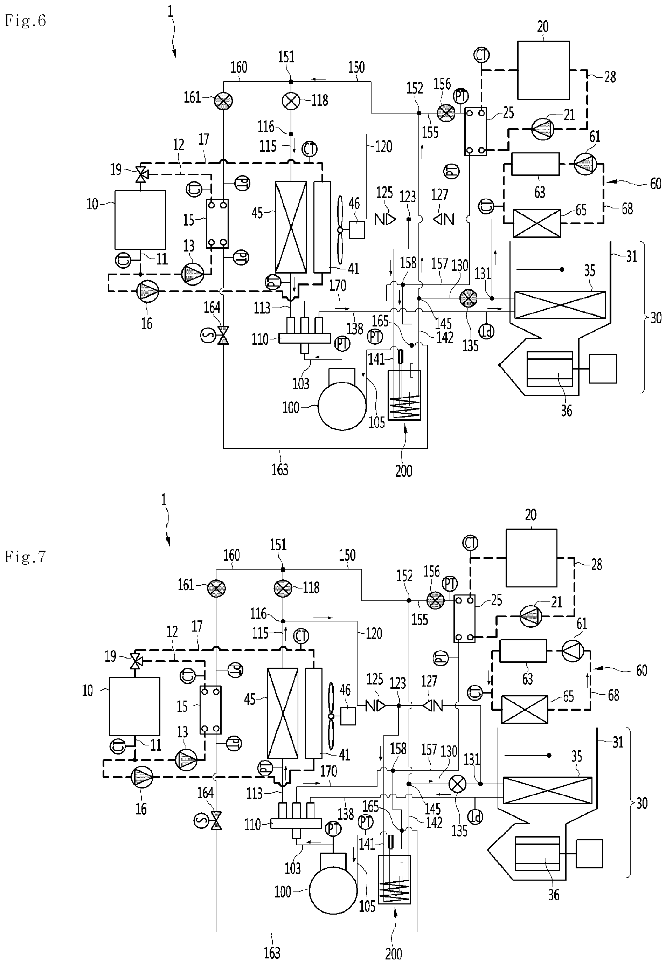

FIG. 6 is a view showing a flow of a working fluid in a heating mode of a heat pump system for an electric vehicle according to an embodiment of the present disclosure.

The heating mode described above with reference to FIG. 6 may be referred to as a "normal heating mode."

Referring to FIG. 6, in the heating mode, the waste heat expansion valve 161, the cooler expansion valve 156, and the indoor expansion valve 135 may be fully closed. The chiller valve 164 may also be closed.

The outdoor expansion valve 118 may be opened. The outdoor expansion valve 118 may expand the passing refrigerant through opening control.

Meanwhile, in general, the heating mode of the electric vehicle may be operated in a season, a weather, etc., in which an outdoor temperature is low. Therefore, in the heating mode, the power train pump 13, the radiator pump 16, and the battery pump 21 may not operate (OFF).

In addition, the room heater 60 may not operate in the heating mode in which the indoor heat exchanger 35 operates as a condenser. That is, the room heater 60 may operate in the heating mode (defrost, dehumidification, etc.) in which the indoor heat exchanger 35 operates as an evaporator. Thus, the heater pump 61 may not operate (OFF).

The high-temperature, high-pressure compressed refrigerant discharged from the compressor 100 may flow into the indoor connection pipe 138 through the four-way valve 110. In addition, the compressed refrigerant of the indoor connection pipe 138 may be condensed, while passing through the indoor heat exchanger 35.

The condensation refrigerant passing through the indoor heat exchanger 35 may flow into the flow pipe 120 because the indoor expansion valve 135 is in a closed state.

The condensation refrigerant flowing into the flow pipe 120 may pass through the second flow valve 127 and flow into the first auxiliary pipe 141. Here, the first flow valve 125 restricts a flow direction so that the condensation refrigerant of the flow pipe 120 may not flow to the outdoor branch point 116.

The condensation refrigerant flowing into the first auxiliary pipe 141 is sub-cooled, while passing through the auxiliary heat exchanger 200 as described above, and the sub-cooled refrigerant flows into the second auxiliary pipe 142.

Since the indoor expansion valve 135 is in a closed state, the sub-cooled refrigerant of the second auxiliary pipe 142 may flow into the common pipe 150. The refrigerant flowing into the common pipe 150 may flow into the outdoor pipe 115 because the waste heat expansion valve 161 and the cooler expansion valve 156 are closed.

The refrigerant flowing into the outdoor pipe 115 may be expanded, while passing through the outdoor expansion valve 118. The expanded refrigerant may flow into the outdoor heat exchanger 45 and evaporated.

The refrigerant evaporated at the outdoor heat exchanger 45 may flow into the accumulation pipe 170 via the four-way valve 110. In addition, the evaporative refrigerant of the accumulation pipe 170 may be heat-exchanged with the condensation refrigerant, while passing through the auxiliary heat exchanger 200, and a refrigerant in a gaseous state may be recovered to the compressor 100.

Of course, the battery cooling mode may also operate in the heating mode. Specifically, the battery cooling mode in the heating mode may be performed by adjusting an opening such that the cooler expansion valve 156 is opened.

FIG. 7 is a view showing a flow of a working fluid in a dehumidification mode of a heat pump system for an electric vehicle according to an embodiment of the present disclosure. Specifically, FIG. 7 is a view illustrating a flow of a coolant and a refrigerant based on a dehumidification mode (hereinafter, referred to as a dehumidification heating mode) for providing heating to a room.

Referring to FIG. 7, in the dehumidification heating mode, the outdoor heat exchanger 45 operates as a condenser and the indoor heat exchanger 35 may operate as an evaporator.

That is, the refrigerant cycle in the dehumidification heating mode may be the same as the refrigerant cycle of the cooling mode. Therefore, the description of the flow of the refrigerant in the dehumidification heating mode may be replaced by the description of the flow of the refrigerant in the cooling mode described above.

Accordingly, ambient air of the indoor heat exchanger 35 may be cooled. Thus, a heater actuator may operate (ON) to maintain the heating provided to the room. Also, the heater pump 61 may operate.

In the dehumidification heating mode, the outdoor expansion valve 151, the waste heat expansion valve 161, and the cooler expansion valve 156 may be fully closed. The chiller valve 164 may also be closed.

The indoor expansion valve 135 may be opened. The indoor expansion valve 135 may expand the refrigerant passing through the opening control.

The sub-cooled refrigerant of the second auxiliary pipe 142 may flow into the indoor pipe 130 and expanded by the indoor expansion valve 135. The expanded refrigerant may be evaporated by heat exchange, while passing through the indoor heat exchanger 25.

In the environment in which the dehumidification heating mode operates, the indoor air of the electric vehicle may be in a state containing a large amount of vapor.

Also, in the dehumidification heating mode, the indoor air may pass through the indoor heat exchanger 35 by the operation of the indoor fan 36 provided in the indoor duct 31.

Since the indoor heat exchanger 35 operates as an evaporator, the refrigerant may absorb heat from the ambient air. That is, the relatively high temperature indoor air flowing into the indoor duct 31 may be cooled by releasing heat to the refrigerant flowing through the indoor heat exchanger 35.

Thus, the indoor air containing a relatively large amount of vapor may be lowered in temperature, while passing through the indoor heat exchanger 35, and reach a dew point. The vapor of the indoor air may be condensed. By the condensation, the indoor air passing through the indoor heat exchanger 35 may be reduced in the amount of vapor.

The indoor air may pass through the heater core 63 to maintain indoor heating because a temperature thereof is in a lowered state.

The heater core 63 may be heated as the coolant absorbing heat by the heater passes therethrough. Therefore, the indoor air having the reduced amount of vapor may be increased in temperature again, while passing through the heater core 63.

The air passing through the heater core 63 may be discharged back to the room. Accordingly, although the indoor heat exchanger 35 operates as an evaporator, heating may be continuously provided to the room.

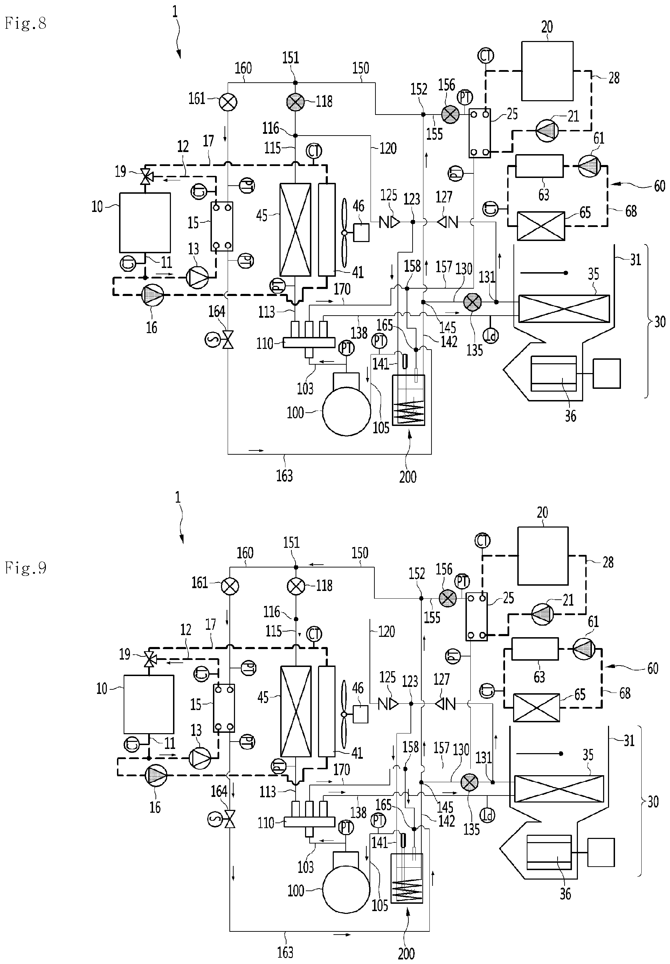

FIG. 8 is a view showing a flow of a working fluid in a first waste heat recovery mode of a heat pump system for an electric vehicle according to an embodiment of the present disclosure.

The first waste heat recovery mode, which is one of heating modes of the electric vehicle, may be defined as a heating mode in which a coolant circulating through the power train module 10 and/or the battery 20 is used as a single heat source of refrigerator evaporation to reduce power consumption of the battery.

The first waste heat recovery mode may be referred to as a "single heat source waste heat recovery mode."

Referring to FIG. 8, the outdoor expansion valve 118 and the indoor expansion valve 135 may be fully closed in the first waste heat recovery mode. The waste heat expansion valve 161 and the chiller valve 164 may be opened. In addition, the power train pump 13 operates (ON). Also, the heater pump 61 does not operate (OFF).

Meanwhile, FIG. 8 shows a case of using a coolant absorbing heat generated from the power train module 10 as a heat source of refrigerant evaporation. Therefore, in FIG. 8, the battery pump 21 does not operate (OFF) and the cooler expansion valve 156 is fully closed.

However, if a condition for heat dissipation of the battery 20 is satisfied, the coolant absorbing heat generated from the battery 20 may be used as a heat source of refrigerant evaporation by opening the cooler expansion valve 156 and operating the battery pump 21 (ON). In this case, it will be apparent that the coolant absorbing the heat generated from the battery 20 may be used as a heat source for refrigerant evaporation alone or together with the coolant absorbing heat generated from the power train module 10.

In the first waste heat recovery mode, the compressed refrigerant discharged from the compressor 100 may flow into the indoor heat exchanger 35 through the four-way valve 110. The compressed refrigerant may be condensed, while passing through the indoor heat exchanger 35.

The condensation refrigerant passing through the indoor heat exchanger 35 may flow into the first auxiliary pipe 141 along the flow pipe 120 because the indoor expansion valve 135 is closed.

Also, the condensation refrigerant flowing into the first auxiliary pipe 141 may be sub-cooled, while passing through the auxiliary heat exchanger 200, the sub-cooled refrigerant may flow into the common pipe through the second auxiliary pipe 142.

The refrigerant flowing into the common pipe 150 may flow into the chiller pipe 160 because the outdoor expansion valve 118 and the cooler expansion valve 156 are closed. The refrigerant flowing into the chiller pipe 160 may be expanded, while passing through the waste heat expansion valve 161.

The expanded refrigerant flows into the power train chiller 15 may be heat-exchanged with a high temperature coolant which has absorbed heat of the power train module 10.

That is, the expanded refrigerant may be evaporated, while passing through the power train chiller 15. Here, the power train chiller 15 may operate as an evaporator.

The evaporative refrigerant passing through the power train chiller 15 may flow into the accumulation pipe 170 through the chiller recovery pipe 163 because the chiller valve 164 is in an opened state.

In addition, the evaporative refrigerant flowing into the accumulation pipe 170 may be heat-exchanged with the condensation refrigerant, while passing through the auxiliary heat exchanger 200. In addition, the evaporative refrigerant separated in the gaseous state at the auxiliary heat exchanger 200 may flow into the intake pipe 105 and be recovered to the compressor 100.

FIG. 9 is a view showing a flow of a working fluid in a second waste heat recovery mode of a heat pump system for an electric vehicle according to an embodiment of the present disclosure.

The second waste heat recovery mode, which is one of the heating modes of the electric vehicle, may be defined as a heating mode in which a coolant and ambient air are used as heat sources for refrigerant evaporation in order to reduce power consumption of the battery.

The second waste heat recovery mode may be referred to as "dual-heat source waste heat recovery mode."

Referring to FIG. 9, the outdoor expansion valve 118 may be opened in the second waste heat recovery mode, with respect to the first waste heat recovery mode.

That is, the sub-cooled refrigerant flowing through the common pipe 150 may be branched from the first connection point and flow into the outdoor pipe 115 and the chiller pipe 160.

The refrigerant flowing into the chiller pipe 160 may be evaporated, while passing through the power train chiller 15 in the same manner as the first waste heat recovery mode described above. The refrigerant flowing into the outdoor pipe 115 may be evaporated, while passing through the outdoor heat exchanger 45.

The evaporative refrigerant passing through the outdoor heat exchanger 45 flows into the accumulation pipe 170 via the four-way valve 110. The evaporative refrigerant passing through the power train chiller 15 may join the evaporative refrigerant passing through the outdoor heat exchanger 45 at the chiller junction point 165 and flow into the auxiliary heat exchanger 200.

Of course, if the condition required for heat dissipation of the battery 20 is satisfied, the cooler expansion valve 156 may be opened and the battery cooler 25 may also operate as an evaporator.

In this case, the evaporative refrigerant passing through the power train chiller 15, the outdoor heat exchanger 45, and the battery cooler 25 may join the accumulation pipe 170 and flow to the auxiliary heat exchanger 200.

Therefore, the outdoor heat exchanger 45 may use the ambient air as a heat source of refrigerant evaporation, the power train chiller 15 may use the coolant circulating through the power train module 10 as a heat source for refrigerant evaporation, and the battery cooler 25 may use the coolant circulating through the battery 20 as a heat source of refrigerant evaporation. Even in this case, the heat source of refrigerant evaporation may be the coolant and the ambient air which are dually provided.

The evaporative refrigerant flowing into the auxiliary heat exchanger 200 may be heat-exchanged with the condensation refrigerant as described above. In addition, the evaporative refrigerant separated in the gaseous state may be recovered to the compressor 100 through the intake pipe 105.

FIG. 10 is a P-h diagram showing comparison of cycles according to the presence or absence of an auxiliary heat exchanger according to an embodiment of the present disclosure, and FIG. 11 is an experimental graph showing comparison of changes in superheating and sub-cooling according to the presence or absence of the auxiliary heat exchanger according to the embodiment of the present disclosure.

Referring to FIG. 10, a first cycle diagram Z1 when the auxiliary heat exchanger 200 according to an embodiment of the present disclosure is not provided and a second cycle diagram Z2 when the auxiliary heat exchanger 200 according to the embodiment of the present disclosure is provided may be compared.

The experimental graphs shown in FIGS. 10 to 15 are based on the conditions in which the compressor 100 operates at 4000 RPM, an outdoor temperature is 0°C (Celsius), and R-134a is used as a refrigerant.

Referring to the second cycle diagram Z2, it can be seen that a discharge pressure is reduced (PD2) and sub-cooling is increased (s2) in the second cycle diagram Z2 than in the first cycle diagram Z1.

Referring to a refrigerant state at the evaporator inlet in the second cycle Z2, it can be seen that dryness thereof is lower than the first cycle Z1. That is, the amount of flash gas f2 generated at the inlet of the evaporator in the second cycle degree Z2 may be less than the amount of flash gas f1 generated at the inlet of the evaporator in the first cycle degree Z1.

Accordingly, the heat pump 1 according to the embodiment of the present disclosure minimizes loss of the refrigerant flow rate supplied to the evaporator by reducing the flash gas and minimizes a reduction in he amount of latent heat by increasing a ratio of the liquid phase of the refrigerant at the inlet of the evaporator. Therefore, the performance of the heat pump 1 may be improved.

Referring to FIGS. 10 and 11, the sub-cooling (sub-cooled 2, SC2) of the condensation refrigerant with the auxiliary heat exchanger 200 is increased by 9% on average, compared to the sub-cooling (sub-cooled 1, SC1) of the condensation refrigerant without the auxiliary heat exchanger 200.

As described above, the increase in the sub-cooling has a limitation that it brings about an increase in superheating.

Referring to FIG. 11, it can be seen that the superheating of the case SH2 with the auxiliary heat exchanger 200 according to an embodiment of the present disclosure SH2 is increased by 5% on average, compared to a case where the auxiliary heat exchanger 200 is not provided SH1.

However, since the heat pump 1 is provided with the auxiliary heat exchanger 200 according to the embodiment of the present disclosure has a rate of increase (9%) of the sub-cooling is significantly greater than a rate of increase (5%), the amount of latent heat, which is used for phase change of the refrigerant in the evaporator. As a result, overall performance of the heat pump 1 may be further improved by canceling out the effect on the increase in the superheating.

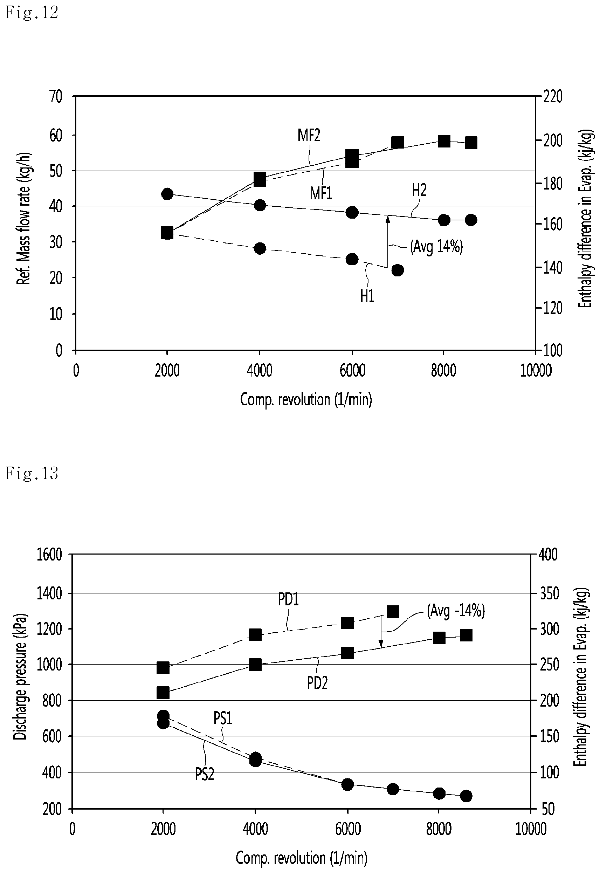

FIG. 12 is an experimental graph showing a comparison of refrigerant mass flow rates and enthalpy difference of an evaporator according to the presence or absence of an auxiliary heat exchanger according to an embodiment of the present disclosure.

Referring to FIGS. 10 and 12, the refrigerant mass flow rate (MF2) with the auxiliary heat exchanger 200 according to an embodiment of the present disclosure and the refrigerant mass flow rate without the auxiliary heat exchanger 200 may have the same level.

However, it can be seen that the enthalpy difference H2 in the evaporator with the auxiliary heat exchanger 200 is increased by about 14% on average, compared with the enthalpy difference H1 in the evaporator without the auxiliary heat exchanger 200.

Accordingly, it can be seen that the heat pump 1 according to the embodiment of the present disclosure has a further increased amount of heat absorption in the evaporation process. That is, the increase in latent heat in the evaporator based on the increase in the sub-cooling has the advantage of absorbing more heat energy during the evaporation process.

FIG. 13 is an experimental graph showing a comparison of a discharge pressure and an intake pressure of a compressor according to the presence or absence of an auxiliary heat exchanger according to an embodiment of the present disclosure.

Referring to FIGS. 10 and 13, it can be seen that a compressor intake pressure PS2 with the auxiliary heat exchanger 200 is equal to a compressor intake pressure PS1 without the auxiliary heat exchanger 200.

However, it can be seen that the compressor discharge pressure PD2 with the auxiliary heat exchanger 200 is reduced by about 14% as compared with a compressor discharge pressure PD1 without the auxiliary heat exchanger 200. That is, the intake pressures of the compressor are equal, but the discharge pressure is reduced by about 14% as compared with the discharge pressure without the auxiliary heat exchanger 200.

Finally, the heat pump 1 according to an embodiment of the present disclosure advantageously reduces a load required for compression, that is, compression work. Specifically, the reduction of the discharge pressure may reduce the compression ratio, thereby improving efficiency to perform the compression process at an optimal compression ratio.

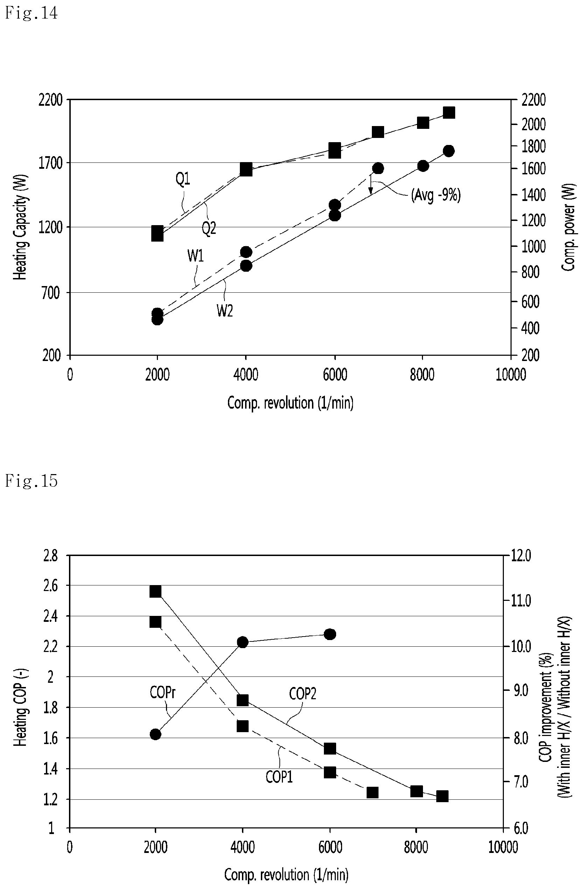

FIG. 14 is an experimental graph showing a comparison of heating capacity and power consumption according to the presence or absence of an auxiliary heat exchanger according to an embodiment of the present disclosure, and FIG. 15 is an experimental graph showing a comparison of heating coefficients of performance (heating COP) and an improvement rate of the heating COP according to the presence or absence of an auxiliary heat exchanger according to an embodiment of the present disclosure.

Here, heating capacity may be defined as the sum of the power consumption of the compressor to the amount of heat absorbed in the evaporation process.

Referring to FIG. 14, it is confirmed that the heating capacity Q2 with the auxiliary heat exchanger 200 and the heating capacity Q1 without the auxiliary heat exchanger 200 have the same level.

However, it can be seen that the power consumption W2 with the auxiliary heat exchanger 200 is reduced by about 9% on average as compared with the power consumption W1 without the auxiliary heat exchanger 200.

Specifically, the heat pump 1 according to an embodiment of the present disclosure may reduce the power consumption W2 due to the reduction in the discharge pressure PD2 described above.

In addition, the increase in the amount of heat absorption of the evaporator described above and the reduction of the power consumption of the compressor may improve the coefficient of performance (COP) of heating.

Referring to FIG. 15, it can be seen that the second COP (COP2) with the auxiliary heat exchanger 200 is improved by about 10.1% as compared with the first COP (COP1) without the auxiliary heat exchanger 200.

Specifically, when the compressor 100 operates at 2000 RPM, an improvement rate (COPr) of the second COP (COP2) as compared to the first COP (COP1) is 8.1%.

When the compressor 100 operates at 4000 RPM, the improvement rate (COPr) of the second COP (COP2) as compared to the first COP (COP1) is 10.1%.

When the compressor 100 operates at 6000 RPM, the improvement rate COPR of the second COP (COP2) as compared to the first COP (COP1) is 10.2%.

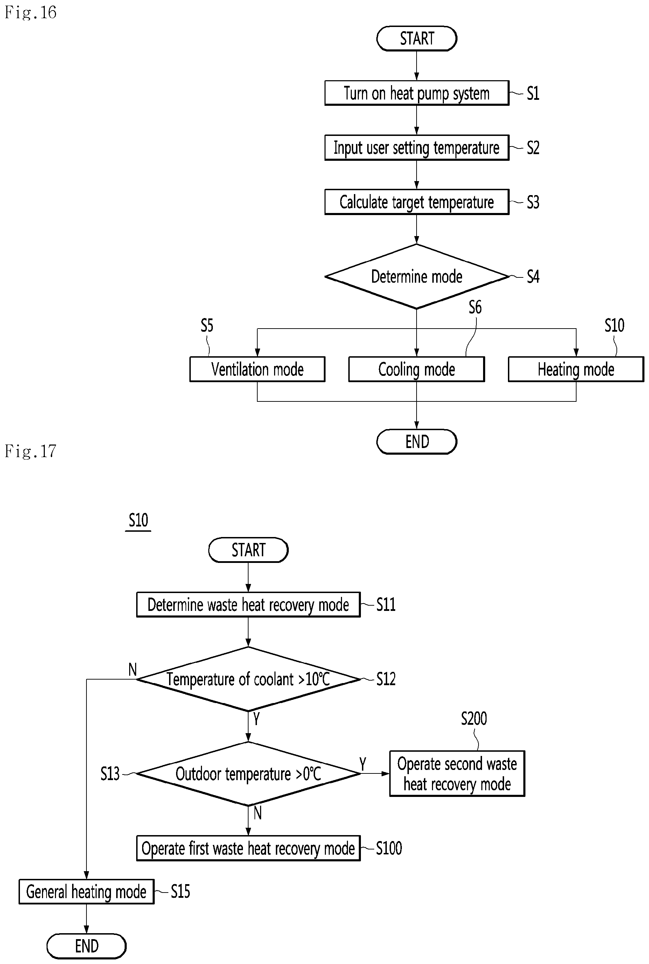

FIG. 16 is a flowchart illustrating a control method for determining an operation mode of a heat pump system for an electric vehicle according to an embodiment of the present disclosure.

Referring to FIG. 16, the control method of the heat pump system 1 for an electric vehicle according to an embodiment of the present disclosure may include a heat pump ON step (S1).

The heat pump ON step may be understood as a step of receiving a user's heat pump operation command by the indoor controller 39.

The user may operate the indoor controller 39 to make the indoor air conditioning environment comfortable. For example, the indoor controller 39 may be provided with an auto input button for automatically determining a current state of the indoor air conditioning environment and providing an optimal operation mode. Of course, the indoor controller 39 may be provided with a manual input button for directly inputting a desired operation mode and an indoor air conditioning environment by the user.

The controller 300 may receive a user set temperature (S2).

The user set temperature may be a desired temperature directly set by the user using the indoor controller 39.

When the user inputs the user set temperature, the controller 300 may perform the indoor air conditioning in the optimal operation mode by detecting an indoor and outdoor environment and a state of the electric vehicle parts.

Specifically, the controller 300 may detect the user set temperature, outdoor (ambient air) temperature, room temperature, solar radiation, and occupancy, and calculate a target temperature of air discharged into the room based on the detection information (S3).

The outdoor temperature may be detected by the outdoor temperature sensor. The indoor temperature may be detected by the indoor temperature sensor. The solar radiation may be detected by the solar radiation sensor. The occupancy may be detected by the PIR sensor.

The controller 300 may calculate the target temperature based on the information detected by the plurality of sensors described above. For example, when the user set temperature is 23°C and the outdoor temperature is 0°C, the target temperature of the air discharged to the room may be calculated as 43°C.

In addition, the controller 300 may determine an operation mode based on the calculated target temperature (S4).

Specifically, the controller 300 may determine the operation mode of the heat pump 1 based on the calculated target temperature, outdoor temperature, saturation pressure, and dew point.

For example, when the calculated target temperature is 43°C and the outdoor temperature is 0°C, the heat pump may be determined as the heating mode (S10).

The controller 300 may determine one operation mode among the ventilation mode (S5), the cooling mode (S6) and the heating mode (S10) through the step of determining the operation mode.

The controller 300 may control each component to operate a refrigerant cycle in the determined operation mode.

Meanwhile, the controller 300 may determine whether heat dissipation is necessary by detecting a temperature of the power train module 10 independently of steps S2 to S4. Similarly, the heat pump 1 may determine whether heat dissipation is necessary by detecting the temperature of the battery 20 independently of steps S2 to S4.

When the heat dissipation is required in the power train module 10, the controller 300 may control to operate the power train pump 13 or the radiator pump 16 based on the outdoor temperature, the coolant temperature and the operation mode determined in step S4.

For example, the controller 300 may control the power train pump 13 to operate when operating in the waste heat recovery mode among the heating mode (S10) to be described later. When the power train pump 13 operates (ON), the waste heat expansion valve 161 may be opened to allow the refrigerant to flow into the power train chiller 15.

In addition, when heat dissipation is required for the battery 20, the controller 300 may control the battery pump 21 to operate based on the outdoor temperature and the coolant temperature. When the battery pump 21 is operated, the cooler expansion valve 156 may be opened to allow the refrigerant to flow into the battery cooler 25.

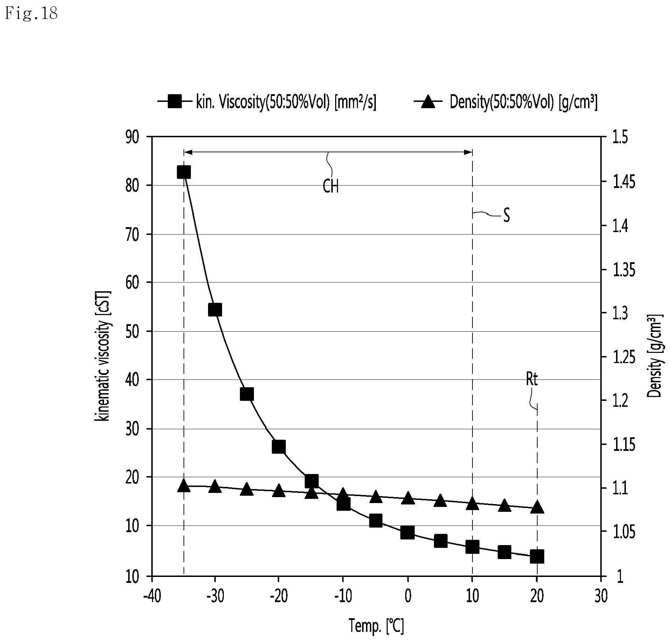

FIG. 17 is a flow chart showing a control method of a heating mode according to an embodiment of the present disclosure, and FIG. 18 is an experimental graph showing a change in viscosity of a coolant according to a temperature.

Referring to FIGS. 17 and 18, when the operation mode is determined as the heating mode (S10), the controller 300 may determine the waste heat recovery mode (S11).

As described above, the waste heat recovery mode may be defined as a mode using heat generated in an electric component of the electric vehicle as a heat source of a refrigerant in the evaporator. The waste heat recovery mode may include the first waste heat recovery mode described above with reference to FIG. 8 and the second waste heat recovery mode described above with reference to FIG. 9.

First, the controller 300 may determine whether a temperature of the coolant performing heat dissipation of the electrical component is higher than a coolant reference temperature (S12).

The coolant reference temperature may be determined based on a change in viscosity of the coolant. For example, the coolant reference temperature may be set to 10°C.

The coolant reference temperature is described in detail.

Referring to FIG. 18, it can be seen in the graph that the kinematic viscosity sharply changes over a change in temperature Temp.

In particular, in a sudden change section CH where the temperature of the coolant is lowered to below 10°C, the kinematic viscosity of the coolant increases significantly than the kinematic viscosity at room temperature RT. Therefore, a reference for determining the coolant reference temperature is set to room temperature RT. Here, the room temperature RT may be defined as 20°C.

The kinematic viscosity is defined as a ratio of a viscosity coefficient to density. A viscous force is proportional to the viscosity coefficient.

As the viscous force increases, the coolant may flow into the plurality of pumps 13, 16, 21 in a sticky state. That is, the coolant at the sudden change section CH may rapidly increase power consumption of the pumps 13, 16 and 21 and the flow rate of the coolant may fluctuate unstably. In this case, the performance of the pumps 13, 16, and 21 may be reduced and the flow rate of the circulating coolant is unbalanced. As a result, unstable heating operation may adversely affect reliability of the heat pump 1.

Therefore, in an embodiment of the present disclosure, a temperature at which the viscosity of the coolant is increased by 10% as compared to the viscous force at room temperature RT is set to the coolant reference temperature S.

The coolant reference temperature at which the viscous force is increased by 10% as compared with the room temperature RT is about 10°C.

Therefore, in order for the coolant to normally exchange heat with the refrigerant in the power train chiller 15 and/or the battery cooler 25, the controller 300 may determine whether the temperature of the coolant performing heat dissipation of the electrical component is higher than the coolant reference temperature 10°C.

Specifically, the controller 300 may determine whether the coolant absorbing heat of the power train line 10 is higher than 10°C based on the detection information of the coolant temperature sensor CT installed at the power train line 11 performing cooling of the power train module 10.

In addition, the controller 300 may determine whether the coolant absorbing heat of the battery 20 is higher than 10°C based on the detection information of the coolant temperature sensor CT installed at the battery line 28.

When the temperature of the coolant is lower than the coolant reference temperature, the controller 300 may control the corresponding component to perform the general heating mode described above with reference to FIG. 6.

Meanwhile, the controller 300 may determine whether an outdoor temperature is higher than a freezing point of the coolant if the temperature of the coolant is higher than the coolant reference temperature (S13).

Here, the freezing point of the coolant is set to 0°C.

Specifically, if the temperature of the coolant absorbing heat of the power train 10 or the coolant absorbing heat of the battery 20 is higher than the coolant reference temperature, the heat pump 1 may determine whether the outdoor temperature is higher than 0°C.

The controller 300 may control the corresponding component to perform the first waste heat recovery mode when the outdoor temperature is lower than the freezing point of the coolant (S100).

Specifically, if the outdoor temperature is lower than 0°C, a temperature difference with the low temperature refrigerant at the outdoor heat exchanger 45 operating as an evaporator is reduced, and thus, thermal efficiency between the ambient air and the refrigerant may be degraded.

Therefore, the use of the coolant absorbing the waste heat of the power train module 10 or the battery 20 as a heat source for evaporation of the refrigerant may increase an evaporation temperature than the use of ambient air as a heat source for evaporation of the refrigerant at the outdoor heat exchanger 45. That is, when the outdoor temperature is lower than 0°C, the first waste heat recovery mode may be operated to improve the heating performance.

Meanwhile, the controller 300 may control the corresponding component to perform the second waste heat recovery mode if the outdoor temperature is higher than the freezing point of the coolant (S200).

Specifically, in the second waste heat recovery mode, the coolant absorbing the waste heat of the power train module 10 or the battery 20 and the ambient air may be used together as heat sources for evaporation of the refrigerant.

When the dual heat sources defined as the coolant and ambient air are used for evaporation of the refrigerant, it is possible to reduce power consumption than using only the outdoor heat exchanger 45 for heat exchange with the ambient air, and since the evaporation temperature is higher than in the first waste heat recovery mode in terms of cycle, the heating performance may be improved.

Thus, the second waste heat recovery mode may be operated when the outdoor temperature is higher than 0°C, thereby improving the heating performance.

After all, according to the waste heat recovery mode described above, power consumption of the battery may be minimized and the comfort of the occupant may be improved by utilizing the waste heat generated from the electrical components of the electric vehicle.

## Claims

1. A heat pump system for an electric vehicle, the heat pump system comprising:
a coolant line through which a coolant circulates through to a power train module (10) and a battery (20);
a refrigerant line through which a refrigerant circulates to a compressor (100), an indoor heat exchanger (35), an outdoor heat exchanger (45), and a plurality of expansion valves;
a power train chiller to allow the coolant line through which the coolant circulates to the power train module and the refrigerant line at which one of the plurality of expansion valves (161, 118, 156, 135) is installed to be heat-exchanged; and
a battery cooler (25) to allow the coolant line through which the coolant circulates to the battery (20) and the refrigerant line at which the other of the plurality of expansion valves (161, 118, 156, 135) is installed to be heat-exchanged.

2. The heat pump system of claim 1, wherein the plurality of expansion valves further comprise:
an outdoor expansion valve configured to expand the refrigerant flowing into the outdoor heat exchanger; and
an indoor expansion valve configured to expand the refrigerant flowing into the indoor heat exchanger,
wherein the outdoor expansion valve and the indoor expansion valve are fully closed and at least one of one expansion valve and the other expansion valve is opened in a first waste heat recovery mode in which the coolant circulating at least one of the power train module and the battery is used as a single heat source of refrigerant evaporation.

3. The heat pump system of claim 2, wherein the indoor expansion valve is fully closed, the outdoor expansion valve is opened, and at least one of one expansion valve and the other expansion valve is opened in a second waste heat recovery mode in which the coolant and ambient air are used as heat sources of refrigerant evaporation.

4. The heat pump system of claim 3, wherein the first waste heat recovery mode and the second waste heat recovery mode are operated when a temperature of the coolant is higher than a coolant reference temperature defined based on a change in a viscous force.

5. The heat pump system of any one of claims 1 to 4, wherein the refrigerant line comprises:
a four-way valve configured to switch a flow direction of the refrigerant discharged from the compressor;
an accumulation pipe extending to an auxiliary heat exchanger having an internal space from the four-way valve;
an outdoor pipe extending from the outdoor heat exchanger;
an indoor pipe extending from the indoor heat exchanger;
a flow pipe branched from the outdoor pipe and extending to an indoor branch point of the indoor pipe;
a first auxiliary pipe branched from the flow pipe and extending to the auxiliary heat exchanger; and
a second auxiliary pipe coupled to the first auxiliary pipe and configured to guide a refrigerant heat-exchanged with a refrigerant filling the internal space so as to be discharged from the auxiliary heat exchanger.

6. The heat pump system of claim 5, wherein the refrigerant line further comprises:
a first flow valve installed at the flow pipe to allow the refrigerant to flow from a fork of the outdoor pipe to a fork of the flow pipe; and
a second flow valve installed at the flow pipe to allow the refrigerant to flow from the indoor branch point to the fork of the flow pipe.

7. The heat pump system of claim 5 or 6, wherein the refrigerant line further comprises a common pipe having one end coupled to the outdoor pipe and the other end coupled to the second auxiliary pipe.

8. The heat pump system of claim 7, further comprising:
a chiller pipe branched from the outdoor pipe at one end of the common pipe and extending to the power train chiller; and
a chiller recovery pipe extending from the power train chiller to the accumulation pipe and configured to guide the refrigerant heat-exchanged with the coolant at the power train chiller.

9. The heat pump system of any one of claims 1 to 8, further comprising:
an indoor fan configured to blow air to the indoor heat exchanger;
a heater configured to perform heating;
a heater line configured to guide the coolant to circulate to the heater; and
a heater core installed at the heater line and configured to be heated by the coolant passing through the heater,
wherein indoor air passing through the indoor heat exchanger by the air blown from the indoor fan is discharged to a room through the heater core.

10. A method of controlling a heat pump system for an electric vehicle which includes a refrigerant line through which a refrigerant circulates to a compressor, an indoor heat exchanger, an outdoor heat exchanger, and a plurality of expansion valves, a coolant line through which a coolant circulates to a power train module and a battery, a power train chiller and a battery cooler provided to allow the coolant line and the refrigerant line to be heat-exchanged, and a plurality of sensors, the method comprising:
calculating a target temperature of air discharged to a room based on a user setting temperature input by a user and an outdoor temperature, an indoor temperature, occupancy, and internal solar radiation detected by the plurality of sensors;
determining one operation mode among a ventilation mode, a cooling mode, and a heating mode based on the calculated target temperature and the outdoor temperature; and
determining a waste heat recovery mode in which the refrigerant is evaporated in at least one of the power train chiller and the battery cooler when the heating mode is determined.

11. The method of claim 10, wherein the determining of the waste heat recovery mode comprises determining whether a temperature of the coolant detected by the plurality of sensors is higher than a coolant reference temperature defined based on a change in a viscous force.

12. The method of claim 10 or 11, wherein the determining of the waste heat recovery mode further comprises determining whether the outdoor temperature is higher than a freezing point of the coolant when the temperature of the coolant is higher than the coolant reference temperature.

13. The method of any one of claims 10 to 12, further comprising: operating in a general heating mode in which the refrigerant is evaporated in the outdoor heat exchanger when the temperature of the coolant is lower than the coolant reference temperature.

14. The method of any one of claims 11 to 13, wherein the coolant reference temperature is set to a temperature at which a viscous force of the coolant increases by 10%, relative to a viscous force at room temperature.

15. The method of any one of claims 12 to 14, further comprising: operating in a single heat source waste heat recovery mode in which only the coolant is used as a heat source of refrigerant evaporation when the outdoor temperature is higher than the melting point of the coolant, and
